# EUROPEAN PATENT APPLICATION

(11) **EP 4 686 152 A1**
(43) Date of publication of application: **28.01.2026**
(21) Application number: 24777602.4
(22) Date of filing: 28.02.2024
(51) Int. Cl.: H04L 9/40

(54) **SOURCE ADDRESS VERIFICATION LIST ACQUISITION METHOD AND APPARATUS, ELECTRONIC DEVICE, AND STORAGE MEDIUM**

(30) Priority: 29.03.2023 CN 202310375134; 16.01.2024 CN 202410065176
(71) Applicant: Huawei Technologies Co., Ltd., Shenzhen, Guangdong 518129 (CN)
(72) Inventor: LIU, Mingxing, Shenzhen, Guangdong 518129 (CN); HUANG, Mingqing, Shenzhen, Guangdong 518129 (CN); GENG, Nan, Shenzhen, Guangdong 518129 (CN); TAN, Zhen, Shenzhen, Guangdong 518129 (CN)
(74) Representative: Pfenning, Meinig & Partner mbB
(86) International application number: PCT/CN2024/079027
(87) International publication number: WO 2024/198812

(57) **Abstract**

This application discloses a method and apparatus for obtaining a source address validation list, an electronic device, and a storage medium, and pertains to the field of network technologies. In this method, an edge network device in an autonomous domain obtains an IP address prefix owned by an external network connected to the autonomous domain, so that the source address validation list can be obtained based on the obtained IP address prefix and an access type of the external network.

## Description

This application claims priorities to Chinese Patent Application No. 202310375134.0, filed on March 29, 2023 and entitled "METHOD FOR GENERATING SOURCE ADDRESS VALIDATION LIST, ADVERTISEMENT PACKET SENDING METHOD, AND APPARATUS", and to Chinese Patent Application No. 202410065176.9, filed on January 16, 2024 and entitled "METHOD AND APPARATUS FOR OBTAINING SOURCE ADDRESS VALIDATION LIST, ELECTRONIC DEVICE, AND STORAGE MEDIUM". The foregoing patent applications are incorporated herein by reference in their entireties.

### TECHNICAL FIELD

This application relates to the field of network technologies, and in particular, to a method and apparatus for obtaining a source address validation list, an electronic device, and a storage medium.

### BACKGROUND

An autonomous system (autonomous system, AS) in internet is also referred to as an autonomous domain. A plurality of network devices are disposed in the autonomous domain. A network device that is in the AS and that is connected to an external network is referred to as an edge network device. An interface that is in the edge network device and that supports communication with the external network is referred to as an external interface, and the external interface can perform packet transmission between the AS and the external network. The edge network device performs source address validation on a packet from the external network to filter out an invalid packet with a forged source address. Currently, the edge network device validates a data packet from the external network in a unicast reverse path forwarding (unicast reverse path forwarding, URPF) manner. A process is as follows: The edge network device determines a source address of the data packet and an external interface (namely, an incoming interface of the data packet in an edge network) that is in the edge network device and that receives the data packet, and searches a forwarding information base for whether an interface corresponding to the source address is consistent with the incoming interface. If the interfaces are inconsistent, it is determined that the data packet is an invalid packet. However, when there is asymmetric routing in the external network connected to the edge network device, an interface corresponding to a source address of a valid packet of the external network in the forwarding information base may be inconsistent with an incoming interface of the valid packet. As a result, the valid packet is identified as an invalid packet. Therefore, there is an urgent need for a method for generating a source address validation list for the external interface in the AS, to validate a packet according to the method.

### SUMMARY

Embodiments of this application provide a method and apparatus for obtaining a source address validation list, an electronic device, and a storage medium, to generate the source address validation list for an external interface in an AS. Technical solutions are as follows.

According to a first aspect, a method for obtaining a source address validation list is provided. The method is performed by a first edge network device in an autonomous domain. Any network connected to the autonomous domain and outside the autonomous domain is referred to as a first network. The method includes: first obtaining a first IP address prefix owned by the first network, and then obtaining the source address validation list based on the first IP address prefix and an access type of the first network, where the source address validation list includes the first IP address prefix and an interface identifier of a first external interface, and the first external interface is determined based on the access type.

In this method, the edge network device in the autonomous domain obtains an IP address prefix owned by an external network (for example, the first network) connected to the autonomous domain, so that the source address validation list can be obtained based on the obtained IP address prefix and an access type of the external network.

In a possible implementation, a process of obtaining the source address validation list based on the first IP address prefix and the access type of the second network includes: if the access type of the first network is a cross-domain multi-homing access type or an internet access type, determining an external interface that is in the first edge network device and that is connected to the second network as the first external interface; and obtaining a blocklist in the source address validation list based on the first IP address prefix and the interface identifier of the first external interface, where the blocklist includes the first IP address prefix.

Based on the foregoing possible implementation, an IP address prefix owned by a cross-domain multi-homing access network or an internet access network is added to a blocklist of an external interface not connected to the cross-domain multi-homing access network or the internet access network, so that source address validation is subsequently performed, by using the blocklist, on a data packet received by the external interface, and a case in which a packet whose source IP address prefix is the IP address prefix owned by the cross-domain multi-homing access network or the internet access network enters the autonomous domain through the external interface can be avoided.

In a possible implementation, the method further includes: determining a first source network and a second source network of the first IP address prefix; and if the first source network is the same as the second source network, performing the step of obtaining a blocklist in the source address validation list. The first source network is a network whose first IP address prefix is advertised to the autonomous domain, and the second source network is a network to which the first IP address prefix determined based on routing information in the autonomous domain belongs.

Based on the foregoing possible implementation, conflict detection on a network source of the first IP address prefix is implemented, to avoid an inaccurate source address validation list caused by adding an incorrectly advertised address prefix to the source address validation list.

In a possible implementation, a process of obtaining the source address validation list based on the first IP address prefix and the access type of the second network includes: if the access type of the first network is a single-homing access type or a complete multi-homing access type, determining an external interface that is in the first edge network device and that is connected to the first network as the first external interface; and obtaining an allowlist in the source address validation list based on the first IP address prefix and the interface identifier of the first external interface, where the allowlist includes the first IP address prefix.

Based on the foregoing possible implementation, an IP address prefix owned by a single-homing access network or a complete multi-homing access network is added to an allowlist of an external interface connected to the single-homing access network or the complete multi-homing access network, so that source address validation is subsequently performed, by using the allowlist, on a data packet received by the external interface, and a case in which a data packet whose source IP address prefix is an IP address prefix owned by another network enters the AS through the external interface can be avoided.

In a possible implementation, the first network is connected to the first edge network device. Based on this, a process of obtaining the first IP address prefix owned by the first network includes: obtaining the first IP address prefix based on the routing information in the autonomous domain, where the routing information includes the IP address prefix owned by the first network.

Based on the foregoing possible implementation, a trustworthy first IP address prefix can be obtained, and the source address validation list is obtained based on the trustworthy first IP address prefix, so that it can be ensured that the obtained source address validation list is trustworthy and accurate.

In a possible implementation, a process of obtaining the first IP address prefix owned by the first network includes: receiving an advertisement packet, and obtaining the first IP address prefix from the advertisement packet. The advertisement packet is used for advertising an IP address prefix used for source address validation, and the advertisement packet includes the first IP address prefix.

**In** a possible implementation, the first network is connected to the first edge network device, and the advertisement packet is an inter-domain advertisement packet from the first network.

Based on the foregoing possible implementation, the first edge network device can obtain a trustworthy first IP address prefix, and the source address validation list is obtained based on the trustworthy first IP address prefix, so that it can be ensured that the obtained source address validation list is trustworthy and accurate.

**In** a possible implementation, the access type of the first network is determined based on an interface identifier of the external interface that is in the first edge network device and that is connected to the first network.

**In** a possible implementation, the advertisement packet further includes a network identifier of the first network.

In a possible implementation, the advertisement packet is an intra-domain advertisement packet sent by an edge network device in the autonomous domain, and the advertisement packet further includes a network identifier of the first network.

Based on the foregoing possible implementation, the network identifier in the advertisement packet indicates a network to which the first IP address prefix belongs, and the network to which the first IP address prefix belongs does not need to be determined by querying interface configuration information.

Based on the foregoing possible implementation, an edge network device that is not connected to the first network can also obtain the IP address prefix that is owned by the first network and that is used for source address validation, to add the IP address prefix of the first network to a local source address validation list.

In a possible implementation, the advertisement packet further includes an access type identifier, and the access type of the first network is determined based on the access type identifier.

In a possible implementation, the intra-domain advertisement packet further includes at least one of a blocklist generation identifier, a prefix category identifier, and an inter-domain advertisement identifier, the blocklist generation identifier indicates whether to generate the blocklist in the source address validation list based on the first IP address prefix, the prefix category identifier indicates whether the first IP address prefix is a first-type IP address prefix, the inter-domain advertisement identifier indicates whether the first IP address prefix is a second-type IP address prefix, the first-type IP address prefix is an IP address prefix obtained based on the routing information in the autonomous domain, and the second-type IP address prefix is an IP address prefix obtained from an inter-domain advertisement packet.

Based on the foregoing possible implementation, the first edge network device distinguishes between categories of the first IP address prefix by using the prefix category identifier and the inter-domain advertisement identifier, and adds the first IP address prefix to the blocklist in the source address validation list by using a list generation identifier.

In a possible implementation, the advertisement packet further includes an anycast type identifier, the anycast type identifier indicates whether the first IP address prefix is an anycast address prefix, and the access type of the second network connected to the first external interface is a non-internet access type. Based on this, the method further includes: if the anycast type identifier indicates that the first IP address prefix is not the anycast address prefix, performing the step of obtaining the source address validation list, where the source address validation list includes the interface identifier of the first external interface and the blocklist, and the blocklist includes the first IP address prefix.

In a possible implementation, the advertisement packet further includes an attribute identifier, the attribute identifier indicates whether a packet can enter the autonomous domain through an internet interface, and the access type of the second network connected to the first external interface is the internet access type. Based on this, the method further includes: if the attribute identifier indicates that the packet cannot enter the autonomous domain through the internet interface, performing the step of obtaining the source address validation list, where the source address validation list includes the interface identifier of the first external interface and the blocklist, and the blocklist includes the first IP address prefix.

In a possible implementation, the advertisement packet further includes an allowlist generation identifier, and the allowlist generation identifier indicates whether to generate the allowlist in the source address validation list based on the first IP address prefix. Based on this, the method further includes: if the allowlist generation identifier indicates to generate the allowlist in the source address validation list based on the first IP address prefix, performing the step of obtaining the source address validation list, where the source address validation list includes the interface identifier of the first external interface and the allowlist, and the allowlist includes the first IP address prefix; or if the allowlist generation identifier indicates that the allowlist in the source address validation list cannot be generated based on the first IP address prefix, performing the step of obtaining the source address validation list, where the source address validation list includes the interface identifier of the first external interface and the blocklist, and the blocklist includes the first IP address prefix.

Based on the foregoing possible implementation, an attribute of the first IP address prefix of the first network in the autonomous domain is advertised via an advertisement packet with a tag (for example, an anycast type identifier, an attribute identifier, or an allowlist generation identifier), to avoid a case in which the edge network device determines the attribute of the IP address prefix in a complex manner like query or validation, so that operation and maintenance complexity is reduced, and a risk of a false positive of the source address list is reduced.

In a possible implementation, the method further includes:
receiving a data packet through the first external interface, where the data packet includes a source address; and
performing source address validation on the data packet based on the source address and the first IP address prefix in the source address validation list.

Based on the foregoing possible implementation, source address validation is performed, by using the source address validation list, on the data packet received by the first external interface, so that an invalid packet does not enters the autonomous domain through the first external interface.

According to a second aspect, an advertisement packet sending method is provided. The method is performed by a first device in a first network. The method includes: generating an inter-domain advertisement packet, and sending the inter-domain advertisement packet to an autonomous domain connected to the first network, where the inter-domain advertisement packet is used for advertising an IP address prefix used for source address validation, and the inter-domain advertisement packet includes a first IP address prefix owned by the first network.

In this method, the device in the first network advertises, via the inter-domain advertisement packet, the autonomous domain connected to the first network of the IP address prefix that is of the first network and that is used for source address validation, so that trustworthiness of the advertised IP address prefix can be ensured, and an edge network device in the autonomous domain can obtain an accurate and trustworthy source address validation list based on the trustworthy IP address prefix.

In a possible implementation, the inter-domain advertisement packet further includes at least one of an anycast type identifier, an attribute identifier, an allowlist generation identifier, and a network identifier of the first network, the anycast type identifier indicates whether the first IP address prefix is an anycast address prefix, the attribute identifier indicates whether a packet can enter the autonomous domain through an internet interface, and the allowlist generation identifier indicates whether to generate an allowlist in the source address validation list based on the first IP address prefix.

According to a third aspect, an advertisement packet sending method is provided. The method is performed by a first edge network device in an autonomous domain. The method includes: first obtaining a first IP address prefix owned by a first network, generating an intra-domain advertisement packet based on the first IP address prefix and a network identifier of the first network, and sending the intra-domain advertisement packet to a second edge network device in the autonomous domain, where the first network is any network connected to the autonomous domain and outside the autonomous domain, the intra-domain advertisement packet is used for advertising an IP address prefix used for source address validation, and the intra-domain advertisement packet includes the first IP address prefix and the network identifier.

Based on the foregoing possible implementation, the second edge network device in the autonomous domain can obtain the IP address prefix that is of the first network and that is used for source address validation, to add the IP address prefix to a source address validation list of a local interface.

In a possible implementation, obtaining the first IP address prefix owned by the first network includes: obtaining the first IP address prefix from an inter-domain advertisement packet from the first network, where the inter-domain advertisement packet includes the first IP address prefix.

In a possible implementation, the inter-domain advertisement packet further includes at least one of an anycast type identifier, an attribute identifier, an allowlist generation identifier, and a network identifier of the first network, the anycast type identifier indicates whether the first IP address prefix is an anycast address prefix, the attribute identifier indicates whether a packet can enter the autonomous domain through an internet interface, and the allowlist generation identifier indicates whether to generate an allowlist in the source address validation list based on the first IP address prefix.

In a possible implementation, the intra-domain advertisement packet further includes at least one of the anycast type identifier, the attribute identifier, the allowlist generation identifier, and the network identifier of the first network.

In a possible implementation, obtaining the first IP address prefix owned by the first network includes: obtaining the first IP address prefix based on routing information in the autonomous domain, where the routing information includes the IP address prefix owned by the first network.

In a possible implementation, the intra-domain advertisement packet further includes at least one of an access type identifier, a blocklist generation identifier, a prefix category identifier, and an inter-domain advertisement identifier, the access type identifier indicates an access type of the first network, the blocklist generation identifier indicates whether to generate a blocklist in the source address validation list based on the first IP address prefix, the prefix category identifier indicates whether the first IP address prefix is a first-type IP address prefix, the inter-domain advertisement identifier indicates whether the first IP address prefix is a second-type IP address prefix, the first-type IP address prefix is an IP address prefix obtained based on the routing information in the autonomous domain, and the second-type IP address prefix is an IP address prefix obtained from an inter-domain advertisement packet.

According to a fourth aspect, an apparatus for obtaining a source address validation list is provided. The apparatus includes a functional module configured to perform the method for obtaining the source address validation list provided in any one of the first aspect or the optional manners of the first aspect.

According to a fifth aspect, an apparatus for sending an advertisement packet is provided. The apparatus includes a functional module configured to perform the advertisement packet sending method provided in any one of the second aspect or the optional manners of the second aspect.

According to a sixth aspect, an apparatus for sending an advertisement packet is provided. The apparatus includes a functional module configured to perform the advertisement packet sending method provided in any one of the second aspect or the optional manners of the second aspect.

According to a seventh aspect, an electronic device is provided. The electronic device includes a processor, and the processor is configured to execute program code, so that the network device performs the method according to any one of the first aspect or the optional manners of the first aspect, the method according to any one of the second aspect or the optional manners of the second aspect, or the method according to any one of the third aspect or the optional manners of the third aspect.

According to an eighth aspect, a computer-readable storage medium is provided. The storage medium stores at least one piece of program code, and the program code is read by a processor, so that an electronic device performs the method according to any one of the first aspect or the optional manners of the first aspect, the method according to any one of the second aspect or the optional manners of the second aspect, or the method according to any one of the second aspect or the optional manners of the second aspect.

According to a ninth aspect, a computer program product or a computer program is provided. The computer program product or the computer program includes program code, the program code is stored in a computer-readable storage medium, a processor of a network device reads the program code from the computer-readable storage medium, and the processor executes the program code, so that the electronic device performs the method according to any one of the first aspect or the optional manners of the first aspect, the method according to any one of the second aspect or the optional manners of the second aspect, or the method according to any one of the second aspect or the optional manners of the second aspect.

In this application, based on the implementations of the foregoing aspects, the implementations may be further combined to provide more implementations.

### BRIEF DESCRIPTION OF DRAWINGS

FIG. 1 is a diagram of an implementation environment for applying a method for obtaining a source address validation list according to an embodiment of this application;
FIG. 2 is a diagram of a structure of an inter-domain advertisement TLV according to an embodiment of this application;
FIG. 3 is a diagram of a structure of an intra-domain advertisement TLV according to an embodiment of this application;
FIG. 4 is a flowchart of a method for obtaining a source address validation list according to an embodiment of this application;
FIG. 5 is a diagram of another implementation environment for applying a method for obtaining a source address validation list according to an embodiment of this application;
FIG. 6 is a flowchart of an advertisement packet sending method according to an embodiment of this application;
FIG. 7 is a flowchart of another advertisement packet sending method according to an embodiment of this application;
FIG. 8 is a flowchart of another advertisement packet sending method according to an embodiment of this application;
FIG. 9 is a flowchart of another advertisement packet sending method according to an embodiment of this application;
FIG. 10 is a diagram of a structure of another inter-domain advertisement TLV according to an embodiment of this application;
FIG. 11 is a diagram of a structure of another inter-domain advertisement TLV according to an embodiment of this application;
FIG. 12 is a diagram of another implementation environment for applying a method for obtaining a source address validation list according to an embodiment of this application;
FIG. 13 is a diagram of a structure of an apparatus for obtaining a source address validation list according to an embodiment of this application;
FIG. 14 is a diagram of a structure of an apparatus for sending an advertisement packet according to an embodiment of this application;
FIG. 15 is a diagram of a structure of another apparatus for sending an advertisement packet according to an embodiment of this application;
FIG. 16 is a diagram of a structure of a network device according to an embodiment of this application; and
FIG. 17 is a diagram of a structure of an electronic device according to an embodiment of this application.

### DESCRIPTION OF EMBODIMENTS

To make objectives, technical solutions, and advantages of this application clearer, the following further describes implementations of this application in detail with reference to accompanying drawings.

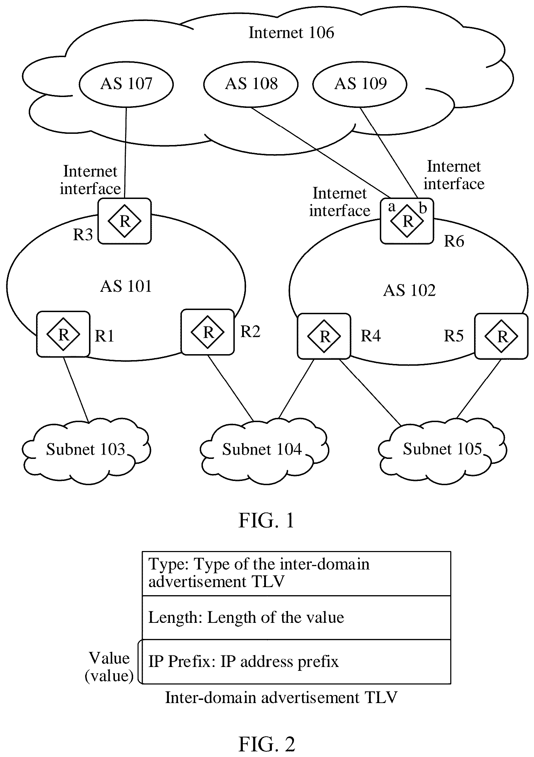

FIG. 1 is a diagram of an implementation environment for applying a method for obtaining a source address validation list according to an embodiment of this application. As shown in FIG. 1, the implementation environment includes an AS 101, an AS 102, a subnet (subnet) 103, a subnet 104, a subnet 105, and an internet 106. The AS 101 is connected to external networks such as the subnet 103, the subnet 104, and the internet 106, and is configured to provide a data packet forwarding service for the connected external network. The AS 102 is connected to external networks such as the subnet 104, the subnet 105, and the internet 106, and is configured to provide a data packet forwarding service for the connected external network. The subnet in the implementation environment is a user-side network, and is used for deploying a user host. The internet 106 includes at least one AS, for example, an AS 107 to an AS 109.

For the AS in the implementation environment, a network connected to the AS, for example, the subnet or the internet, is an external network of the AS. The AS includes a plurality of network devices, and the plurality of network devices included in the AS provide data packet forwarding services for external networks. The plurality of network devices in the AS include an edge network device and a non-edge network device. The non-edge network device is a network device other than the edge network device in the AS. As shown in FIG. 1, network devices R1 to R3 in the AS 101 are respectively connected to the subnet 103, the subnet 104, and the internet 106. The network devices R1 to R3 are edge network devices in the AS 101. Network devices R4 to R6 in the AS 102 are respectively connected to the subnet 104, the subnet 105, and the internet 106. The network devices R1 to R6 are edge network devices in the AS 102.

An interface in the edge network device for connection to an external network is referred to as an external interface, and one edge network device has at least one external interface. Any external network is connected to an external interface in any AS by using any one of a single-homing access type, a complete multi-homing access type, a cross-domain multi-homing access type, or an internet access type, to implement access to the AS. The single-homing access type means that an external network is connected to only one AS and is connected to only one external interface in one edge network device in the AS. For example, the subnet 103 accesses the AS 101 by using the single-homing access type, in other words, the subnet 103 is a single-homing access network. The complete multi-homing access type means that an external network is connected to only one AS, and the external network is connected to a plurality of external interfaces of the AS. The plurality of external interfaces may be located in a same edge network device, or may be located in different edge network devices. For example, the subnet 105 accesses the subnet AS 102 by using the complete multi-homing type, in other words, the subnet 105 is a complete multi-homing access network. The cross-domain multi-homing access type means that an external network is connected to a plurality of ASs. For example, the subnet 104 accesses the AS 101 and the AS 102 by using the cross-domain multi-homing access type, in other words, the subnet 104 is a cross-domain multi-homing access network. The internet access type means that an internet access service AS is connected to another AS. The internet access service AS is an AS configured to provide an internet access service, the internet access service AS is configured to provide an internet access service for the AS connected to the internet access service AS, and an external interface that is in the AS and that is configured to be connected to the internet access service AS is referred to as an internet interface. For example, the AS 107, the AS 108, and the AS 109 are all internet access service ASs. The AS 107 accesses the subnet AS 1 by using the internet access type, in other words, the AS 107 is an internet access network, and R3 is connected to an external interface the AS 107.

FIG. 1 is described by using an example in which there are two ASs outside the internet 106. In some other embodiments, there may be one AS or more than two ASs outside the internet 106. Herein, a quantity of ASs outside the internet is not limited in embodiments of this application. FIG. 1 is described by using an example in which the internet 106 includes three ASs. In some other embodiments, the internet 106 may alternatively include less than three or more than three ASs. Herein, a quantity of ASs in the internet 106 is not limited in embodiments of this application. FIG. 1 is described by using an example in which the AS 101 and the AS 102 each are connected to three external networks. In some other embodiments, the AS may be connected to less than three or more than three external networks. Herein, a quantity of external networks connected to the AS and a manner in which the external network accesses the AS are not limited in embodiments of this application.

For any external interface in any edge network device in the AS, the external interface has the source address validation list, and the source address validation list is used for performing source address validation on a data packet that enters the AS through the external interface (that is, a data packet received by the external interface). The source address validation list includes an interface identifier of the external interface, the source address validation list further includes at least one of a blocklist and an allowlist, and the at least one item corresponds to the interface identifier. The allowlist includes at least one internet protocol (Internet protocol, IP) address prefix owned by an external network connected to the external interface. For the external interface, a data packet whose source IP address prefix is any IP address prefix owned by the external network is a valid packet. The allowlist is used for obtaining a valid packet through validation from the data packet received by the external interface. The blocklist includes at least one IP address prefix not owned by the external network connected to the external interface. For the external interface, a data packet whose source IP address prefix is any IP address prefix not owned by the external network is an invalid packet. The blocklist is used for obtaining an invalid packet through validation from the data packet received by the external interface.

An IP address prefix in the source address validation list is an IP address prefix used for source address validation. In this application, there are two types of IP address prefixes used for source address validation: a first-type IP address prefix and a second-type IP address prefix. The first-type IP address prefix is an IP address prefix that is owned by the external network and that is determined by the edge network device in the AS based on routing information in the AS, and the second-type IP address prefix is an IP address prefix that is owned by the external network and that is advertised by a device outside the AS to the edge network device in the AS.

This application relates to an advertisement packet. The advertisement packet is used for advertising the IP address prefix used for source address validation. There are two types of advertisement packets: an inter-domain advertisement packet and an intra-domain advertisement packet. The inter-domain advertisement packet is an advertisement packet sent by an external device to the edge network device in the AS, and is used for advertising a second-type address prefix owned by an external network in which the external device is located, where the external device is any device in the external network. For example, the external device collects the IP address prefix owned by the external network, and advertises the edge network device in the AS of the collected IP address prefix via the inter-domain advertisement packet. For example, the inter-domain advertisement packet includes at least one inter-domain advertisement type length value (type length value, TLV), and the inter-domain advertisement TLV indicates an IP address prefix that is owned by the external network and that is advertised to the AS through the external network. To be specific, as shown in FIG. 2, the inter-domain advertisement TLV includes the following.

Type: Indicates a TLV type field, and is used for storing a type identifier of the inter-domain advertisement TLV.

Length: Indicates a length field, and is used for storing a length of a value field in the inter-domain advertisement TLV.

Value: Indicates a value field, and is used for storing a value of data advertised by using the inter-domain advertisement TLV.

The data advertised by using the inter-domain advertisement TLV includes an IP prefix (IP Prefix), and a value of the IP prefix is as follows.

IP Prefix: Indicates the advertised IP address prefix.

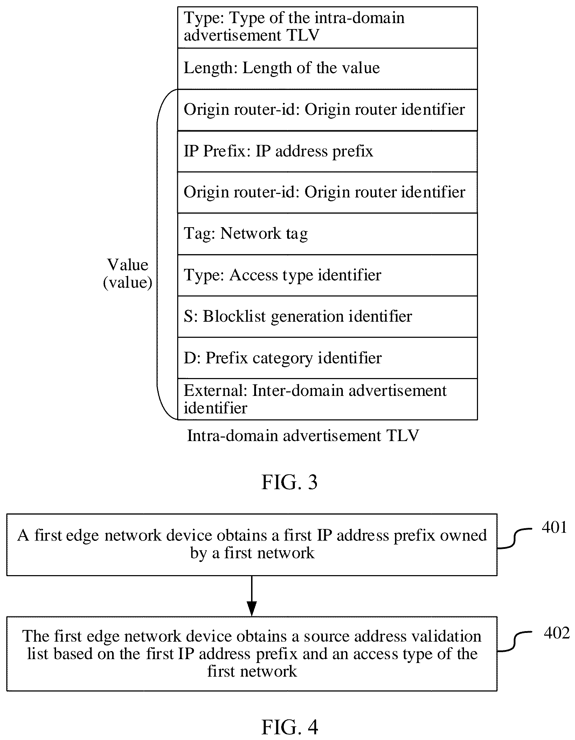

The intra-domain advertisement packet is an advertisement packet advertised in the AS by the edge network device in the AS. After receiving the inter-domain advertisement packet, any edge network device in the AS advertises, via the intra-domain advertisement packet, another edge network device in the AS of the second-type IP address prefix advertised via the inter-domain advertisement packet, so that the another edge network device can obtain the second-type IP address prefix. Therefore, the intra-domain advertisement packet is used for advertising the second-type IP address prefix owned by the external network. For the edge network external device in the AS, an IP address prefix advertised by the external device to the AS is an IP address prefix advertised by the external network to the AS. In another possible implementation, each edge network device in the AS collects, based on the routing information in the AS, an IP address prefix (namely, a first-type IP address prefix) owned by an external network connected to the edge network device, and advertises another edge network device in the AS of the collected first-type IP address prefix via an intra-domain advertisement packet. Therefore, the intra-domain advertisement packet is further used for advertising the first-type IP address prefix owned by the external network. For example, the intra-domain advertisement packet includes at least one intra-domain advertisement TLV. The intra-domain advertisement TLV is used for advertising the edge network device in the AS of an IP address prefix that is owned by the external network and that is used for source address validation. The IP address prefix may be the first-type IP address prefix, or may be a second-type IP address prefix. As shown in FIG. 3, the intra-domain advertisement TLV includes the following.

Type: Indicates a TLV type field, and is used for storing a type identifier of the intra-domain advertisement TLV.

Length: Indicates a length field, and is used for storing a length of a value field in the intra-domain advertisement TLV.

Value: Indicates a value field, and is used for storing a value of data advertised by using the intra-domain advertisement TLV.

The data advertised by using the intra-domain advertisement TLV includes an origin router identifier (IP Prefix), an IP prefix (IP Prefix), a network tag (Tag), an access type (Type), a blocklist generation identifier (S), and a prefix category identifier (D). Values of the data are as follows.

Origin router-id: Indicates the origin router identifier, namely, a device identifier (identifier, ID) of a network device that generates the intra-domain advertisement packet in the AS.

IP Prefix: Indicates the advertised IP address prefix.

Tag: Indicates a network ID of the external network to which the advertised IP address prefix belongs.

Type: Indicates an access type identifier of the external network to which the advertised IP address prefix belongs, and indicates an access type of the external network.

S: Indicates the blocklist generation identifier, and indicates whether to generate, based on the advertised IP address prefix, a blocklist on an external interface connected to a non-origin external network, in other words, indicates to generate the blocklist in the source address validation list based on the advertised IP address prefix. The external network to which the IP address prefix belongs is referred to as an origin network of the IP address prefix, and an external network connected to the AS other than the origin network is a non-origin network of the IP address prefix. The blocklist generation identifier occupies one bit. For example, if the external network is a cross-domain multi-homing access network or an internet access network, S=1, indicating to generate the blocklist based on the advertised IP address prefix; or if the external network is a single-homing access network or a complete multi-homing access network, S=0, indicating that the blocklist cannot be generated based on the advertised IP address prefix.

D: Indicates a prefix category identifier of the advertised IP address prefix, indicates whether the IP address prefix is the first-type IP address prefix, and occupies one bit. For example, if D=1, it indicates that the IP address prefix is the first-type IP address prefix; or if D=0, it indicates that the IP address prefix is not the first-type address prefix.

External: Indicates an inter-domain advertisement identifier, indicates whether the IP address prefix is the second-type IP address prefix, and occupies one bit. For example, if External=1, it indicates that the advertised IP address prefix is the second-type IP address prefix; or if External=0, it indicates that the advertised IP address prefix is not the second-type IP address prefix. External is another prefix category identifier extended in the intra-domain advertisement packet. For example, D is a first prefix category identifier, and External is a second prefix category identifier. The intra-domain advertisement packet is extended by using the inter-domain advertisement identifier, and a new advertisement packet does not need to be developed. The second-type IP address prefix can be advertised via the intra-domain advertisement packet, so that development costs are reduced.

S and D are valid for an advertised first IP address prefix, and are invalid for the advertised second-type IP address prefix. For example, when External=0, S and D are valid; or when External=1, S and D are invalid. S and D are optional items in the intra-domain advertisement TLV. In another possible implementation, the intra-domain advertisement TLV does not include S or D, or the intra-domain advertisement TLV includes D or External.

The following describes, with reference to FIG. 4 based on the implementation environment and the two types of IP address prefixes described above, a procedure of a method for obtaining a source address validation list provided in this application. The procedure of the method includes the following steps.

401: A first edge network device obtains a first IP address prefix owned by a first network.

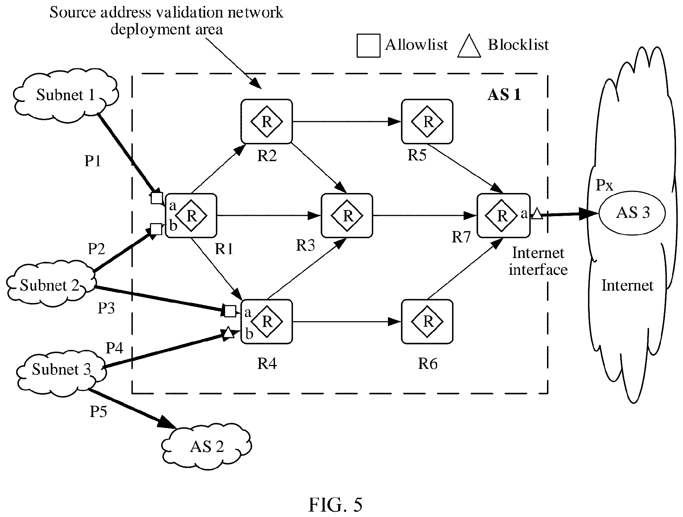

The first edge network device is any edge network device in an AS in which the first edge network device is located, and the AS is an area in which source address validation is deployed for an external network, for example, an AS 1 in FIG. 5. The first network is any external network connected to the AS, the first IP address prefix is a first IP address prefix that is owned by the first network and that is used for source address validation, and there is at least one first IP address prefix.

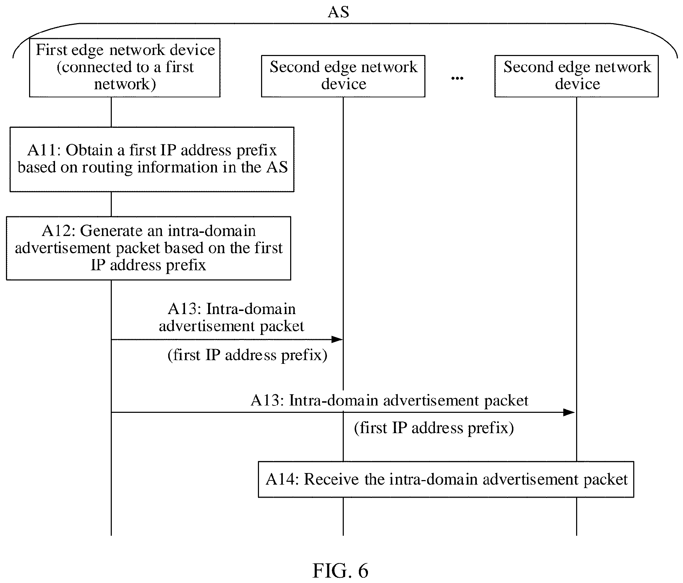

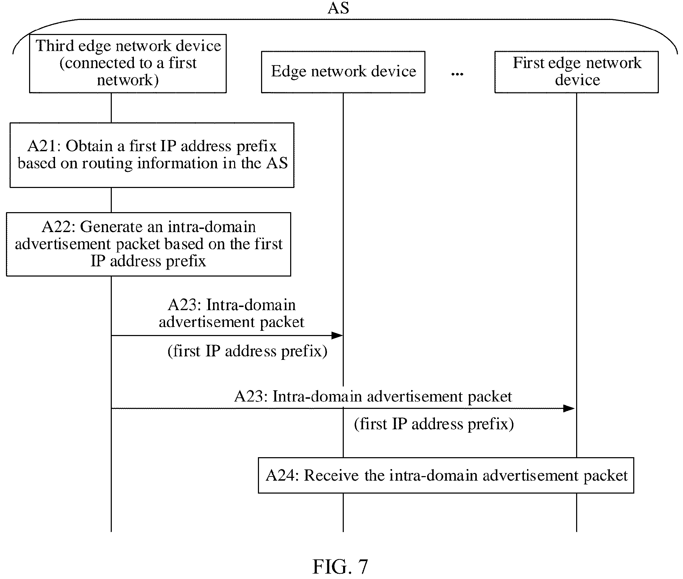

In a possible implementation, the first IP address prefix is a first-type IP prefix that is owned by the first network and that is used for source address validation. The following describes, with reference to FIG. 6 and FIG. 7, a procedure of obtaining the first IP address prefix in this implementation. As shown in FIG. 6, the obtaining procedure includes the following step A11 to step A14.

A11: The first edge network device obtains the first IP address prefix based on routing information in the AS, where the routing information includes the IP address prefix owned by the first network, and the first IP address prefix is an IP address prefix in an IP address.

It is assumed that any external interface in the first edge network device is connected to the first network. If the first network is a single-homing access network or a complete multi-homing access network, the first edge network device obtains, from the AS, at least one piece of routing information related to the external interface. The routing information related to the external interface is routing information advertised (or imported) by the first network to the first edge network device through the external interface, for example, routing information that is of the first network and that is sent by the first network to the external interface according to a routing protocol. The routing protocol is, for example, a routing information protocol (routing information protocol, RIP), an open shortest path first (open shortest path first, OSPF) protocol, an intermediate system to intermediate system (intermediate system to intermediate system, ISIS) protocol, a border gateway protocol (border gateway protocol, BGP), or another routing protocol. Herein, a manner of obtaining the routing protocol and the routing information is not limited in this embodiment of this application.

Alternatively, the routing information related to the external interface is routing information that is obtained by the first edge network device from the AS and that is advertised by the first network to the AS. For example, a network device responsible for advertising routing information advertises routing information of the first network in the AS. After the first edge network device obtains the routing information from the AS, if the routing information meets a matching condition in a routing policy, the first edge network device locally stores the routing information, and a user configures a network ID, an access type ID, and the like of the first network in the routing information. Alternatively, if an outbound interface that exists after route iteration occurs on routing information originally sent by the first network is an external interface connected to the first network, a user configures a network ID, an access type ID, and the like of the first network in the routing information, so that the first edge network device locally finds the routing information of the first network based on the network ID of the first network, and obtains the IP address prefix of the first network from the found routing information.

Alternatively, the routing information related to the external interface is routing information configured by a user for the first network on the first edge network device. Herein, a manner in which the first edge network device obtains the routing information related to the external interface is not limited in this embodiment of this application.

Each piece of routing information related to the external interface includes at least one IP address prefix owned by the first network. After obtaining the routing information, the first edge network device obtains the IP address prefix in the routing information as the first IP address prefix.

The first IP address prefix obtained by the first edge network device according to step A1 is the first-type IP address prefix owned by the first network. When the first IP address prefix is the first-type IP address prefix, the first edge network device locally stores first-type advertisement information of the first IP address prefix. First-type advertisement information of any IP address prefix indicates that the IP address prefix is the first-type IP address prefix, the first-type advertisement information includes the IP address prefix, a blocklist generation identifier S and a prefix category identifier D of the IP address prefix, a network ID of an external network to which the IP address prefix belongs, a device ID of an edge network device connected to the external network, and an access type ID of the external network. An example in which an edge network device R1 in FIG. 5 is the first edge network device is still used. It is assumed that a subnet 1 is the first network, and a first-type IP address prefix that is of the subnet 1 and that is obtained by R1 is P1. It is further assumed that a subnet 2 is the first network, and a first-type IP address prefix that is of the subnet 2 and that is obtained by R1 is P2. First-type advertisement information of P1 and P2 is shown in the following Table 1.

**Table 1**

| Device ID | Network ID | Access type ID | IP address prefix | S | D |
|---|---|---|---|---|---|
| R1 | Subnet 1 | Single-homing access type ID | P1 | S=0 | D=1 |
| R2 | Subnet 2 | Complete multi-homing access type ID | P2 | S=0 | D=1 |

Because the routing information in the AS is trustworthy, a trustworthy first IP address prefix can be obtained based on the routing information, and the source address validation list is subsequently obtained based on the trustworthy first IP address prefix, so that it can be ensured that the obtained source address validation list is trustworthy and accurate.

After obtaining the first IP address prefix, the first edge network device advertises another edge network device in the AS of the first IP address prefix via an intra-domain advertisement packet. For example, the following step A12 to step A14 are shown.

A12: The first edge network device generates the intra-domain advertisement packet based on the first IP address prefix, where the intra-domain advertisement packet includes the first IP address prefix and the network identifier of the first network.

The intra-domain advertisement packet further includes at least one of the access type ID of the first network, the first IP address prefix, a blocklist generation identifier, a prefix category identifier, and an inter-domain advertisement identifier. When an access type of the first network is a single-homing access type or a complete multi-homing access type, the blocklist generation identifier is 0, indicating that a blocklist cannot be generated based on the first IP address prefix; the prefix category identifier is 1, indicating that the first IP address prefix is the first-type IP address prefix; and the inter-domain advertisement identifier is 0, indicating that the advertised first IP address prefix is not a second-type IP address prefix.

The first edge network device generates the intra-domain advertisement packet based on first-type advertisement information of each first IP address prefix. For example, for each first IP address prefix in the at least one first IP address prefix, the first device generates, by using an IP address prefix advertised by using the first IP address prefix based on the first-type advertisement information of the first IP address prefix and in a format of the intra-domain advertisement TLV shown in FIG. 3, an intra-domain advertisement TLV including the first IP address prefix, where the intra-domain advertisement TLV is used for advertising the AS that the first IP address prefix is the first-type IP address prefix owned by the first network. In this case, the intra-domain advertisement TLV includes the first-type advertisement information of the first IP address prefix. In this way, the first edge network device can generate at least one intra-domain advertisement TLV, and generate an intra-domain advertisement packet based on the at least one inter-domain advertisement TLV. The intra-domain advertisement packet includes the at least one intra-domain advertisement TLV.

A13: The first edge network device sends the intra-domain advertisement packet to a second edge network device in the AS.

The second edge network device is each edge network device other than the first edge network device in the AS. The AS 1 in FIG. 5 is still used as an example. R1 is the first edge network device, and R2, R4, R5, R6, and R7 are all second edge network devices.

The first edge network device broadcasts the intra-domain advertisement packet in the AS, to send the intra-domain advertisement packet to each second edge network device in the AS, or the first edge network device separately sends the intra-domain advertisement packet to each second edge network device in the AS.

A14: The second edge network device receives the intra-domain advertisement packet.

Each second edge network device in the AS receives the intra-domain advertisement packet. The following uses any second edge network device as an example to describe a process of processing the intra-domain advertisement packet by the second edge network device.

The second edge network device obtains content of the at least one intra-domain advertisement TLV by parsing the intra-domain advertisement packet, generates first-type advertisement information of one first IP address prefix for any intra-domain advertisement TLV based on content of the intra-domain advertisement TLV, and each time one piece of first-type advertisement information is generated, stores the first-type advertisement information for subsequent use.

In a similar manner, each second edge network device in the AS generates first-type advertisement information of each first IP address prefix based on the intra-domain advertisement packet received by the second edge network device, and locally stores the first-type advertisement information of each first IP address prefix, so that each edge network device in the AS stores the first-type advertisement information of each first IP address prefix owned by the first network.

Step A11 to step A14 are described by using an example in which the first edge network device advertises, in the AS, the first-type IP address prefix owned by the first network. For each external interface in the first edge network device, if an external network connected to any external interface is the single-homing access network or the complete multi-homing access network, the first edge network device advertises, in the AS in a similar manner, a first-type IP address prefix owned by the external network connected to the external interface, so that each edge network device in the AS stores first-type advertisement information of the first-type IP address prefix.

Step A11 to step A14 are described by using an example in which the first edge network device is connected to the first network. In another possible implementation, the first edge network device is not connected to the first network. With reference to FIG. 7, the following describes a process in which the first edge network device obtains the first-type IP address prefix owned by the first network.

A21: A third edge network device obtains, based on the routing information in the AS, the first IP address prefix owned by the first network.

The third edge network device is any edge network device connected to the first network. After obtaining the first IP address prefix, the third edge network device locally stores the first-type advertisement information of the first IP address prefix. Step A21 is similar to step A11. Herein, details of step A21 are not described again.

A22: The third edge network device generates an intra-domain advertisement packet based on the first IP address prefix, where the intra-domain advertisement packet includes the first IP address prefix and the network identifier of the first network.

Step A22 is similar to step A12. Herein, details of step A22 are not described again.

A23: The third edge network device sends the intra-domain advertisement packet to each edge network device other than the third edge network device in the AS.

Step A23 is similar to step A13. Herein, details of step A23 are not described again.

A24: Each edge network device other than the third edge network device in the AS receives the intra-domain advertisement packet.

Step A24 is similar to step A14. Each edge network device locally stores the first-type advertisement information of the first IP address prefix based on the received intra-domain advertisement packet. Herein, details of step A23 are not described again. In this case, as shown in FIG. 3, the first edge network device is an edge network device other than the third edge network device in the AS. The first edge network device may obtain the first IP address prefix from the intra-domain advertisement packet, and locally store the first-type advertisement information of the first IP address prefix.

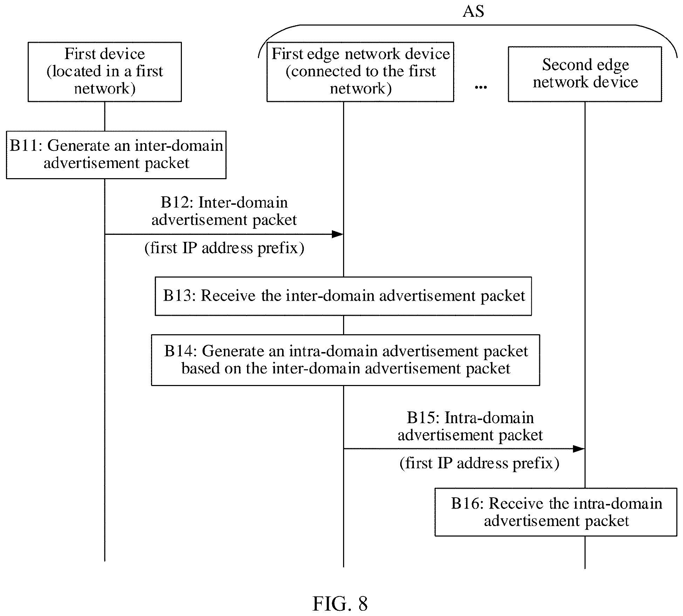

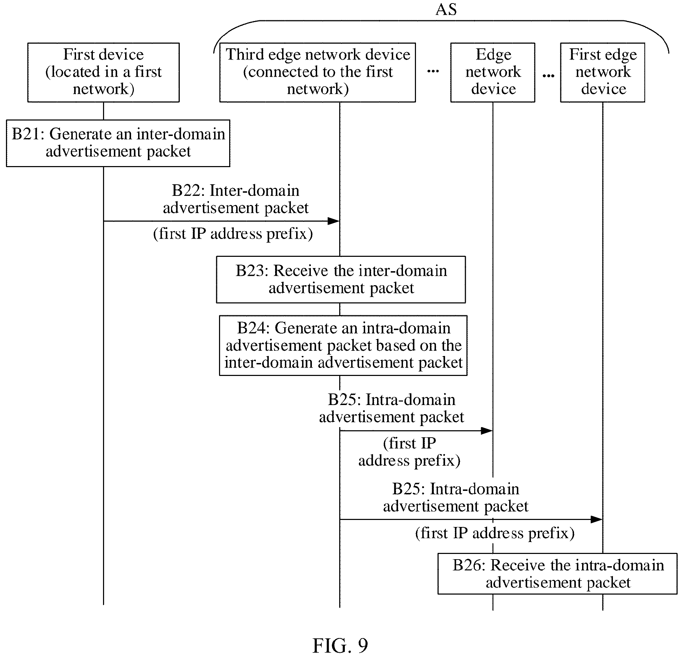

In another possible implementation, the first IP address prefix is a second-type IP prefix that is owned by the first network and that is used for source address validation. The following describes, with reference to FIG. 8 and FIG. 9, a procedure of obtaining the first IP address prefix in this implementation. As shown in FIG. 8, the obtaining procedure includes the following step B11 to step B16.

B11: A first device generates an inter-domain advertisement packet, where the inter-domain advertisement packet includes the first IP address prefix, and the first IP address prefix is the first-type IP address prefix that is owned by the first network and that is used for source address validation.

The first device is any device in the first network, for example, a network device in the first network or a non-network device (for example, a computer device) in the first network. Herein, a type of the first device is not limited in this application. For a device in the AS, the first device is an external network device. If the first network is a cross-domain multi-homing access network, an internet that does not include a subnet, or a subnet in an internet, the first device advertises, by performing step B11 and step B12, the AS connected to the first device of the first-type IP address prefix that is owned by the first network and that is used for source address validation. For example, a subnet 3 in FIG. 5 is the first network.

The IP address prefix owned by the first network is a valid IP address prefix owned by the first network, for example, a source IP address prefix used when a device in the first network sends a packet. The source IP address prefix is an address prefix in a source IP address of the packet. There is at least one IP address prefix owned by the first network. The first IP address prefix advertised via the inter-domain advertisement packet is one or more IP address prefixes owned by the first network.

Before generating the inter-domain advertisement packet, the first device obtains the first IP address prefix from the first network. For example, the first device obtains the first IP address prefix in at least one of the following obtaining manner 1 and obtaining manner 2.

Obtaining manner 1: The first device obtains the first IP address prefix based on a locally configured IP address associated with the first network.

The IP address associated with the first network includes a gateway address, a virtual local area network interface (virtual local area network interface, VlanIF) address, and an IP address in an IP address pool. The gateway address is an IP address of a gateway connected to the first network, and the VlanIF address is an IP address of a layer-3 logical interface used when the first network performs VLAN communication. The IP address pool includes an IP address of each device in the first network, and is, for example, an IP address pool of a dynamic host configuration protocol (dynamic host configuration protocol, DHCP) run in the first network or an IP address pool of a stateless address auto configuration protocol (stateless address autoconfiguration protocol, SLAACP) run in the first network.

The first device obtains a first gateway address, a first VlanIF address, and the IP address in the IP address pool from the locally configured IP addresses associated with the first network, and determines an IP address prefix in each obtained IP address as the first IP address prefix. The first gateway address is an address of a gateway between the first network and the AS, and the first VlanIF address is a VlanIF address used when the first network performs VLAN communication with the AS.

Obtaining manner 2: The first device obtains, according to a routing protocol supported by the first network, the IP address prefix owned by the first network.

The routing protocol includes at least one of an RIP, an ISIS, an OSPF, a BGP, and another routing protocol. Herein, a type of the routing protocol supported by the first network is not limited in this application.

When communicating with the AS according to the routing protocol, the device in the first network may send, to the AS, a packet (referred to as a routing packet) supporting the routing protocol. A source IP address of the routing packet is an IP address owned by the first network. Based on this, the first device obtains the routing packet sent by the device in the first network to the AS, and determines an IP address prefix in the source IP address of the routing packet as the first IP address prefix.

The source IP address of the routing packet is stored in a forwarding information base (forwarding info base, FIB) of a network device in the first network, the FIB table includes a plurality of FIB entries, the FIB entry includes one IP address and one interface identifier, the interface identifier indicates one interface in the network device, and the interface may be an external interface that is in the network device and that is connected to a network other than the first network, or may be an internal interface that is in the network device and that is connected to the device in the first network. The FIB entry indicates to send, through the interface, a packet whose source IP address is the IP address. Based on this, in a possible implementation, the first device obtains the first IP address prefix based on a FIB table of each network device in the first network. For example, an interface identifier in each FIB entry in each FIB table is queried for. If an interface indicated by an interface identifier in any FIB entry is an internal interface, an address prefix in an IP address in the FIB entry is determined as the first IP address prefix.

In the obtaining manner 1 and/or the obtaining manner 2, the at least one first IP address prefix may be obtained, and the first device uses the at least one IP address prefix as an IP address prefix used for source address validation, and generates the inter-domain advertisement packet based on the at least one first IP address prefix.

For example, for each first IP address prefix in the at least one first IP address prefix, the first device generates, by using an IP address prefix advertised by using the first IP address prefix and in a format of the inter-domain advertisement TLV shown in FIG. 2, an inter-domain advertisement TLV including the first IP address prefix, where the inter-domain advertisement TLV is used for advertising the AS that the first IP address prefix is the second-type IP address prefix that is owned by the first network and that is used for source address validation. In this way, the first device can generate at least one inter-domain advertisement TLV, and generate an inter-domain advertisement packet based on the at least one inter-domain advertisement TLV. The inter-domain advertisement packet includes the at least one inter-domain advertisement TLV.

An implementation environment shown in FIG. 5 is used as an example. It is assumed that the first network is the subnet 3, the subnet 3 is connected to an edge network device R4 in the AS 1, the first device in the subnet 3 is a CE 1, first IP address prefixes obtained by the CE 1 from a subnet 1 are P4 and P5, and the CE 1 generates an inter-domain advertisement packet including P4 and P5.

B12: The first device sends the inter-domain advertisement packet to the AS connected to the first network.

For example, the first device sends the inter-domain advertisement packet to any edge network device that is in the AS and that is connected to the first network. FIG. 5 is still used as an example. The CE 1 sends the inter-domain advertisement packet to R4. It should be understood that, as shown in FIG. 5, the subnet 3 is further connected to an AS 2. If a subnet 2 also has a source address validation function for an external network, the CE 1 may also send the inter-domain advertisement packet to the AS 2.

B13: The first edge network device receives the inter-domain advertisement packet.

As shown in FIG. 8, in this case, it is assumed that the first edge network device is any edge network device that is in the AS and that is connected to the first network. FIG. 5 is still used as an example. The first edge network device is R4, and R4 receives the inter-domain advertisement packet from the CE 1. For the first edge network device, the first IP address prefix in the inter-domain advertisement packet is the second-type IP address prefix that is owned by the first network and that is advertised by an external device to the AS.

The first edge network device obtains the first IP address prefix from the inter-domain advertisement packet. For example, the first edge network device generates second-type advertisement information of the at least one first IP address prefix based on the inter-domain advertisement packet. Second-type advertisement information of any IP address prefix indicates that the IP address prefix is a second-type IP address prefix that is owned by an external network to which the IP address prefix belongs and that is advertised by the external device to the AS. For example, the first edge network device obtains content of at least one inter-domain advertisement TLV by parsing the inter-domain advertisement packet. For any inter-domain advertisement TLV, the first edge network device generates second-type advertisement information of one first IP address prefix based on content of the inter-domain advertisement TLV, where the second-type advertisement information includes an inter-domain advertisement identifier External and the first IP address prefix in the inter-domain advertisement TLV. FIG. 5 is still used as an example. It is assumed that advertised first IP address prefixes are P4 and P5. In this case, second-type advertisement information of P4 and P5 is shown in the following Table 2.

**Table 2**

| Device ID | IP address prefix | Network ID | Access type ID | External |
|---|---|---|---|---|
| R4 | P4 | Subnet 3 | Cross-domain multi-homing access type ID | External=1 |
| R4 | P5 | Subnet 3 | Cross-domain multi-homing access type ID | External=1 |

Optionally, as shown in Table 2, second-type advertisement information of any first IP address prefix further includes a device ID of an edge network device that receives the inter-domain advertisement packet, a network ID of the first network, and an access type identifier of the first network, and the access type identifier indicates an access type used by the first network to access the AS. Based on this, a process of generating the second-type advertisement information includes the following step 4011 and step 4012.

Step 4011: The first edge network device obtains, based on an interface ID of an external interface that receives the inter-domain advertisement packet, the network identifier of the first network and the access type identifier of the first network from interface configuration information of the external interface.

Global interface configuration information is configured in each edge network device in the AS, the global interface configuration information includes interface configuration information of each external interface in each edge network device in the AS, and interface configuration information of any external interface includes a device ID of an edge network device in which the external interface is located, an interface ID of the external interface, a network ID of an external network connected to the external interface, and an access type ID of the external network. The AS 1 in FIG. 5 is still used as an example. Global interface configuration information of the AS 1 is shown in the following Table 3.

**Table 3**

| Device ID | Interface ID | Network ID | Access type ID |
|---|---|---|---|
| R1 | a | Subnet 1 | Single-homing access type ID |
| R1 | b | Subnet 2 | Complete multi-homing access type ID |
| R4 | a | Subnet 2 | Complete multi-homing access type ID |
| R4 | b | Subnet 3 | Cross-domain multi-homing access type ID |
| R7 | d | Internet (internet) | Internet access type ID |

The first edge network device queries the global interface configuration information for the interface configuration information of the external interface based on the interface ID of the external interface that receives the inter-domain advertisement packet, obtains the network ID and the access type identifier of the first network from the interface configuration information of the external interface, and may determine an access type of the first network based on the access type identifier of the first network. In this case, the access type of the first network is determined based on the interface ID of the external interface. If the first IP address prefix is obtained based on routing information, the access type of the first network may also be determined based on the interface ID of the external interface.

Step 4012: For each inter-domain advertisement TLV in the inter-domain advertisement packet, the first edge network device generates, based on the access type identifier of the first network, the network identifier of the first network, a device ID of the first edge network device, and a first IP address prefix in the inter-domain advertisement TLV, second-type advertisement information of the first IP address prefix.

Each time the first edge network device generates second-type advertisement information of one IP address prefix, the first edge network device stores the second-type advertisement information of the IP address prefix for subsequent use.

B 14: The first edge network device generates an intra-domain advertisement packet based on the inter-domain advertisement packet, where the intra-domain advertisement packet is used for advertising the second-type IP address prefix owned by the first network.

The intra-domain advertisement packet includes each first IP address prefix advertised via the inter-domain advertisement packet. The first IP address prefix is the second-type IP address prefix owned by the first network. The intra-domain advertisement packet further includes an inter-domain advertisement identifier. In this case, the intra-domain advertisement identifier is 1, indicating that the first IP address prefix is the second-type IP address prefix.

After generating the second-type advertisement information of the at least one first IP address prefix based on the inter-domain advertisement packet, for each first IP address prefix in the at least one first IP address prefix, the first edge network device generates, based on the second-type advertisement information of the first IP address prefix and in a format of an intra-domain advertisement TLV shown in FIG. 4, an intra-domain advertisement TLV including the first IP address prefix. The inter-domain advertisement TLV is used for advertising that the first IP address prefix is the second-type IP address prefix that is owned by the first network and that is advertised by the first device to the AS. Origin router-id, Mask Len, IP Prefix, Type, and Tag in the intra-domain advertisement TLV are respectively the device ID of the first edge network device, a mask length of the first IP address prefix, the first IP address prefix, the access type identifier of the first network, and the network ID of the first network. In this case, S and D in the intra-domain advertisement TLV are random values.

When there is at least one first IP address prefix, the first edge network device generates at least one intra-domain advertisement TLV, and generates an intra-domain advertisement packet based on the at least one intra-domain advertisement TLV, where the intra-domain advertisement packet includes the at least one intra-domain advertisement TLV, and each intra-domain advertisement TLV is used for advertising one first IP address prefix.

The first edge network device can obtain a trustworthy first IP address prefix via the inter-domain advertisement packet, and the source address validation list is obtained based on the trustworthy first IP address prefix, so that it can be ensured that the obtained source address validation list is trustworthy and accurate.

B15: The first edge network device sends the intra-domain advertisement packet to a second edge network device in the AS.

Step B15 is similar to step A13. Herein, details of step B15 are not described again.

B16: The second edge network device receives the intra-domain advertisement packet.

Each second edge network device in the AS receives the intra-domain advertisement packet. The following uses any second edge network device as an example to describe a process of processing the intra-domain advertisement packet by the second edge network device.

The second edge network device obtains content of the at least one intra-domain advertisement TLV by parsing the intra-domain advertisement packet, and generates second-type advertisement information of one first IP address prefix for any intra-domain advertisement TLV based on content of the intra-domain advertisement TLV. The second-type advertisement information includes a first IP address prefix, a device ID, a network ID, an access type identifier, and an inter-domain advertisement identifier in the intra-domain advertisement TLV. Each time the second edge network device generates second-type advertisement information of one IP address prefix, the second edge network device stores the second-type advertisement information of the IP address prefix for subsequent use.

In a similar manner, each second edge network device in the AS generates second-type advertisement information of each first IP address prefix based on the intra-domain advertisement packet received by the second edge network device, and locally stores the second-type advertisement information of each first IP address prefix, so that each edge network device in the AS stores the second-type advertisement information of each first IP address prefix owned by the first network.

Step B11 to step B16 are described by using an example in which the first edge network device is connected to the first network. In another possible implementation, the first edge network device is not connected to the first network. With reference to FIG. 9, the following describes a process in which the first edge network device obtains the second-type IP address prefix owned by the first network.

B21: The first device generates an inter-domain advertisement packet, where the inter-domain advertisement packet includes the first IP address prefix.

Step B21 is similar to step B11. Herein, details of step B21 are not described again.

B22: The first device sends the inter-domain advertisement packet to the AS connected to the first network.

Step B22 is similar to step B12. Herein, details of step B22 are not described again.

B23: A third edge network device receives the inter-domain advertisement packet.

As shown in FIG. 9, in this case, it is assumed that the third edge network device is any edge network device connected to the first network. Step B23 is similar to step B13. The third edge network device locally stores the second-type advertisement information of the first IP address prefix based on the inter-domain advertisement packet. Herein, details of step B23 are not described again.

B24: The third edge network device generates an intra-domain advertisement packet based on the inter-domain advertisement packet, where the intra-domain advertisement packet is used for advertising the second-type IP address prefix owned by the first network.

Step B24 is similar to step B14. Herein, details of step B23 are not described again.

B25: The third edge network device sends the intra-domain advertisement packet to each edge network device other than the third edge network device in the AS.

Step B25 is similar to step B15. Herein, details of step B25 are not described again.

B26: Each edge network device other than the third edge network device in the AS receives the intra-domain advertisement packet.

Step B26 is similar to step B16. Each edge network device locally stores the second-type advertisement information of the first IP address prefix based on the received intra-domain advertisement packet. Herein, details of step B26 are not described again. As shown in FIG. 9, in this case, the first edge network device is an edge network device other than the third edge network device in the AS. The first edge network device may obtain the first IP address prefix from the intra-domain advertisement packet, and locally store the second-type advertisement information of the first IP address prefix. In this case, the first edge network device may determine the access type of the first network based on an access type identifier in the intra-domain advertisement packet, to subsequently obtain the source address validation list based on the first IP address prefix and the access type of the first network.

Step B11 to step B16 and step B21 to step B26 are described by using an example in which one inter-domain advertisement packet includes all first IP address prefixes obtained from the first network. In another possible implementation, if a plurality of first IP address prefixes are obtained, the first device generates a plurality of inter-domain advertisement packets based on the plurality of first IP address prefixes, where each inter-domain advertisement packet is used for advertising at least one first IP address prefix. The first device sends the plurality of inter-domain advertisement packets to any edge network device that is in the AS and that is connected to the first network. Alternatively, the first device separately sends at least one inter-domain advertisement packet to a plurality of edge network devices that are in the AS and that are connected to the first network. Each edge network device that receives the inter-domain advertisement packet locally stores, based on the received inter-domain advertisement packet, second-type advertisement information of a first IP address prefix advertised via the inter-domain advertisement packet, and sends the intra-domain advertisement packet to another edge network device in the AS, so that the another edge network device locally stores, based on the intra-domain advertisement packet, the second-type advertisement information of the first IP address prefix advertised via the inter-domain advertisement packet.

For each external network connected to the AS, if any external network is a single-homing access network or a complete multi-homing access network, an edge network device connected to the external network may obtain, based on the process shown in step A11 to step A14 or the process shown in step A21 to step A24, a first-type IP address prefix owned by the external network, and locally store first-type external advertisement information of the first-type IP address prefix. If any external network is a cross-domain multi-homing access network or an internet access network, an edge network device connected to the external network may obtain, based on the process shown in step B13 to step B16 or the process shown in step B23 to step B26, a second-type IP address prefix owned by the external network, and locally store second-type external advertisement information of the second-type IP address prefix. In this way, each edge network device can store the first-type advertisement information of the first-type IP address prefix owned by each external network and the second-type advertisement information of the second-type IP address prefix owned by each external network.

402: The first edge network device obtains the source address validation list based on the first IP address prefix and the access type of the first network, where the source address validation list includes the first IP address prefix and an interface identifier of a first external interface, and the first external interface is determined based on the access type.

The source address validation list is a source address validation list of the first external interface, the source address validation list further includes at least one of a blocklist and an allowlist, and the first external interface is determined based on the access type of the first network. For example, if the access type of the first network is a single-homing access type or a complete multi-homing access type, the first external interface is an external interface connected to the first network. In this case, the first IP address prefix is added to the allowlist in the source address validation list. For another example, if the access type of the first network is a cross-domain multi-homing access type or an internet access type, the first external interface is an external interface connected to a second network. In this case, the first IP address prefix is added to the blocklist in the source address validation list. The second network is an external network other than the first network in the external networks connected to the AS.

Each edge network device in the AS has the first-type advertisement information and/or the second-type advertisement information of the first IP address prefix. Therefore, for the first IP address prefix, each edge network device may perform step 402. A process in which each edge network device obtains the blocklist in the source address validation list based on the first IP address prefix is similar to this. The following uses the first edge network device as an example to describe, according to the following step C11 and step C12, a process of obtaining the blocklist in the source address validation list.

C11: If the access type of the first network is the cross-domain multi-homing access type or the internet access type, the first edge network device determines the external interface that is in the first edge network device and that is connected to the second network as the first external interface.

In this case, it is assumed that the first IP address prefix is the second-type IP address prefix. The first edge network device obtains the access type identifier of the first network from the second-type advertisement information of the first IP address prefix based on the identifier of the first network. If the access type identifier indicates the cross-domain multi-homing access type or the internet access type, the interface identifier of the first external interface connected to the second network is obtained from an interface identifier of the external interface in the first edge network device. For example, for any first IP address prefix, the first edge network device obtains the device ID of the first edge network device and the network ID of the first network from second-type advertisement information of the first IP address prefix, and query the global interface configuration information for the interface ID of the first external interface based on the device ID and the network ID. For example, if a device ID in any piece of interface configuration information is the device ID of the first edge network device, and a network ID in the interface configuration information is not the ID of the first network, the network ID in the interface configuration information is a network ID of the second network, and the interface ID in the interface configuration information is the interface ID of the first external interface.

C12: The first edge network device obtains the blocklist in the source address validation list based on the first IP address prefix and the interface identifier of the first external interface, where the blocklist includes the first IP address prefix.

Because the first IP address prefix is an IP address prefix that is owned by the first network and that is advertised by an external device, it is considered that the first IP address prefix is trustworthy. The first network and the second network are different networks. Therefore, the first IP address prefix may be added to the blocklist. Based on this, in a possible implementation, the first edge network device queries, based on the interface identifier of the first external interface, whether a blocklist exists in the source address validation list of the first external interface. If the blocklist exists, the first edge network device adds the first IP address prefix to the blocklist. If no blocklist exists in the source address validation list, a blocklist is added to the source address list, and the first IP address prefix is added to the blocklist. In a similar manner, the first edge network device adds each first IP address prefix to a blocklist of each external interface connected to the second network.

FIG. 5 is still used as an example. It is assumed that R4 is the first edge network device, first IP address prefixes are P6 and P7 owned by a subnet X (not shown in FIG. 5), and the subnet 3 connected to an external interface b of R4 is the second network. In this case, the external interface b is the first external interface, and a source address validation list of the external interface b is shown in the following Table 4.

**Table 4**

| Interface ID | Blocklist | Allowlist |
|---|---|---|
| b | P6 and P7 | None |

In another possible implementation, each edge network device that is in the AS and that is connected to the first network obtains, based on the routing information in the AS, the first-type IP address prefix owned by the first network, and sends, to another edge network device in the AS via the intra-domain advertisement packet, the first-type IP address prefix obtained by the edge network device. Each edge network device locally stores first-type advertisement information of the at least one first-type IP address prefix of the first network based on the received intra-domain advertisement packet. In this case, the at least one first-type IP address prefix may include the first IP address prefix, or may not include the first IP address prefix. When the at least one first-type IP address prefix includes the first IP address prefix, the first IP address prefix has two sources: the external network and the routing information.

Due to reasons such as misconfiguration of the first network or a malicious attack, the first IP address prefix advertised by the first device may not belong to the first network. Based on this, for any first IP address prefix, the first edge network device performs conflict detection on a source network of the first IP address prefix based on second-type advertisement information of the first IP address prefix and first-type advertisement information of the IP address prefix owned by the first network, and performs, based on a detection result, the step of obtaining the blocklist in the source address validation list. The detection result indicates whether the first IP address prefix is an IP address prefix incorrectly advertised by the first device. The following describes this implementation with reference to the following step D1 and step D2.

D1: The first edge network device determines a first source network and a second source network of the first IP address prefix, where the first source network is a network whose first IP address prefix is advertised to the AS, and the second source network is a network to which the first IP address prefix determined based on the routing information in the AS belongs.

The first edge network device queries each piece of locally stored second-type advertisement information for the first IP address prefix, and if any piece of second-type advertisement information includes the first IP address prefix, determines a network indicated by a network ID in the second-type advertisement information as the first source network. At least one first source network of the first IP address prefix can be determined by querying the second-type advertisement information.

The first edge network device queries each piece of locally stored first-type advertisement information for the first IP address prefix, and if any piece of second-type advertisement information includes the first IP address prefix, determines a network indicated by a network ID in the first-type advertisement information as the second source network. At least one second source network of the first IP address prefix can be determined by querying the first-type advertisement information.

D2: If the first source network is the same as the second source network, the first IP address prefix is not the IP address prefix incorrectly advertised by the first device, and the first edge network device performs the step of obtaining the blocklist in the source address validation list. If the first source network is different from the second source network, the first IP address prefix is the IP address prefix incorrectly advertised by the first device, and the first edge network device does not perform the step of obtaining the blocklist in the source address validation list, to avoid an inaccurate source address validation list caused by adding an incorrectly advertised address prefix to the source address validation list.

If the first edge network device does not perform the step of obtaining the blocklist in the source address validation list, the first edge network device queries whether the source address validation list already includes the blocklist; if the source address validation list already includes the blocklist, queries whether the first IP address prefix exists in the blocklist; and if the first IP address prefix exists, deletes the first IP address prefix from the blocklist.

The foregoing is described by using an example in which the first edge network device obtains, based on second-type advertisement information of one first IP address prefix, the blocklist of the second network connected to the first edge network device. If the first edge network device is not connected to the second network, the step of obtaining the blocklist in the source address validation list does not need to be performed. In a similar manner, for each edge network device connected to the second network, the edge network device obtains, based on second-type advertisement information of each first IP address prefix, a blocklist in a source address validation list of a local external interface connected to the second network. In another possible implementation, for each edge network device connected to the second network, if the second network is a single-homing access network or a complete multi-homing access network, for the external interface connected to the second network, the edge network device does not perform the step of obtaining the blocklist in the source address validation list. For example, it is assumed that the subnet 3 in FIG. 5 is the first network, the subnet 2 is the second network. In this case, the edge network device R4 does not generate a blocklist in a source address validation list of a local external interface a.

A packet sent by a cross-domain multi-homing network may enter the AS through an external interface that is in the AS and that is connected to the cross-domain multi-homing network, or may first enter an internet and then enter the AS through an interconnection interface of the internet. Therefore, both the cross-domain multi-homing network and the internet may be valid network sources of a source IP address prefix in the packet. The source IP address prefix in the packet cannot be added to a blocklist of the internet, to avoid a case in which a packet carrying the source IP address prefix cannot subsequently pass source address validation on an external interface that is in the AS and that is connected to the internet interface. Based on this, in another possible implementation, if the access type of the first network is the cross-domain multi-homing access network, for any first IP address prefix to be added to the blocklist, any edge network device in the AS queries the global interface configuration information for an access type ID of the second network, and determines, based on an interface type identifier of the second network, an access type used by the second network to access the AS. If the access type of the second network is not the internet access type, the edge network device performs the step of obtaining the blocklist in the source address validation list; or if the access type of the second network is the internet access type, the edge network device does not perform the step of obtaining the blocklist in the source address validation list. FIG. 5 is still used as an example. It is assumed that the first network is the subnet 3, the edge network device is R7, and an external interface a of R7 is connected to an AS 3 in the internet. In this case, R7 does not add P4 or P5 of the subnet 3 to a blocklist of the external interface a.

A packet (referred to as an anycast packet) with an anycast (anycast) address may be sent from a plurality of external networks connected to the AS to the AS. Therefore, the plurality of external networks are all valid network sources of a source IP address prefix (namely, an anycast address prefix) in the anycast packet, and the anycast address prefix cannot be added to blocklists of the plurality of external networks, to avoid a case in which the anycast packet cannot subsequently pass source address validation on an external interface that is in the AS and that is connected to the plurality of external networks. Based on this, in another possible implementation, for any first IP address prefix to be added to the blocklist, any edge network device in the AS determines whether the first IP address prefix is an anycast address prefix. For example, if a first source network of the first IP address prefix is the same as a second source network of the first IP address prefix, the first IP address prefix is not the anycast address prefix. If the first source network is different from the second source network, the first IP address prefix is the anycast address prefix. When the first IP address prefix is not an anycast address, the edge network device performs the step of obtaining the blocklist in the source address validation list. When the first IP address prefix is an anycast address, the edge network device does not perform the step of obtaining the blocklist in the source address validation list.

First-type IP address prefixes of an external network are advertised to the edge network device in the AS via an inter-domain advertisement packet, so that trustworthiness of the first-type IP address prefixes advertised via the inter-domain advertisement packet can be improved. In this case, the advertised first-type IP address prefixes are trustworthy. The edge network device can obtain a source address validation list based on these trustworthy first-type IP address prefixes, and accuracy of the obtained source address validation list can be improved.

A process in which each edge network device obtains the allowlist in the source address validation list based on the first IP address prefix is similar to this. The following uses the first edge network device as an example to describe, according to the following step C21 and step C22, a process of obtaining the allowlist in the source address validation list.

C21: If the access type of the first network is the single-homing access type or the complete multi-homing access type, the first edge network device determines the external interface that is in the first edge network device and that is connected to the first network as the first external interface.

In this case, it is assumed that the first IP address prefix is the first-type IP address prefix. The first edge network device obtains the access type identifier of the first network from the first-type advertisement information of the first IP address prefix based on the identifier of the first network. If the access type identifier indicates the single-homing access type or the complete multi-homing access type, the interface identifier of the first external interface connected to the first network is obtained from an interface identifier of the external interface in the first edge network device. For example, for any first IP address prefix, the first edge network device obtains the device ID of the first edge network device and the network ID of the first network from first-type advertisement information of the first IP address prefix, and query the global interface configuration information for the interface ID of the first external interface based on the device ID and the network ID. For example, if a device ID in any piece of interface configuration information is the device ID of the first edge network device, and a network ID in the interface configuration information is the ID of the first network, an interface ID in the interface configuration information is the interface ID of the first external interface.

C22: The first edge network device obtains the allowlist in the source address validation list based on the first IP address prefix and the interface identifier of the first external interface, where the allowlist includes the first IP address prefix.

The first edge network device queries, based on the interface identifier of the first external interface, whether an allowlist exists in the source address validation list of the first external interface. If the allowlist exists, the first edge network device adds the first IP address prefix to the allowlist. If no allowlist exists in the source address validation list, an allowlist is added to the source address list, and the first IP address prefix is added to the allowlist.

FIG. 5 is still used as an example. It is assumed that R1 is the first edge network device, the subnet 1 is the first network, P1 is the first IP address prefix, and the first external interface is an external interface a in R1. In this case, a source address validation list of the external interface a is shown in the following Table 5.

**Table 5**

| Interface ID | Blocklist | Allowlist |
|---|---|---|
| b | None | P1 |

If the first edge network device is not connected to the first network, the first edge network device does not need to perform step C22. When the first network is a complete multi-homing network, each edge network device that is in the AS and that is connected to the first network has the first-type advertisement information of the first IP address prefix. In this case, in a similar manner, each edge network device adds each first IP address prefix of the first network to an allowlist of a local external interface connected to the first network. For example, the first network is the subnet 2. First IP address prefixes of the subnet 2 include P2 and P3. The edge network device R1 generates a source address validation list of an external interface b shown in Table 6, and the edge network device R4 generates a source address validation list of an external interface a shown in Table 7.

**Table 6**

| Interface ID | Blocklist | Allowlist |
|---|---|---|
| b | None | P2 and P3 |

**Table 7**

| Interface ID | Blocklist | Allowlist |
|---|---|---|
| a | None | P2 and P3 |

In another possible implementation, if the first network is the single-homing access network or the complete multi-homing access network, and the device in the first network advertises, via the inter-domain advertisement packet, the AS of the second-type IP address prefix owned by the first network, each edge network device connected to the first network may further add the second-type IP address prefix to the allowlist in the source address validation list of the first external interface, to add the IP address prefix owned by the first network to the allowlist as soon as possible.

According to the method provided in FIG. 5, an edge network device in the AS obtains an IP address prefix owned by an external network connected to the AS, so that a source address validation list can be obtained based on the obtained IP address prefix and an access type of the external network.

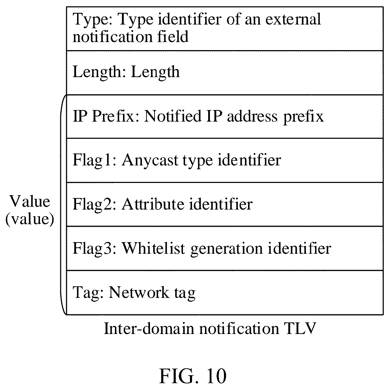

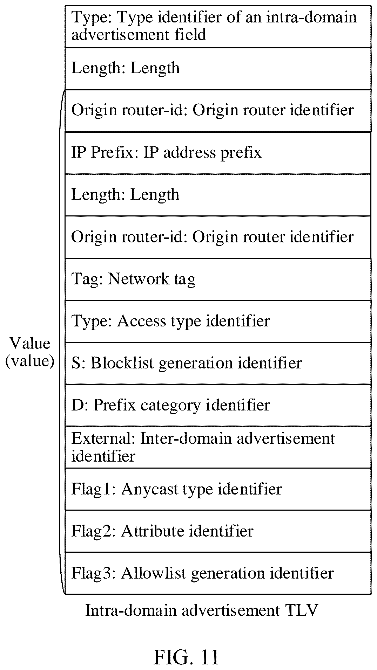

In another possible implementation, in comparison with the inter-domain advertisement TLV shown in FIG. 2 and the intra-domain advertisement TLV shown in FIG. 3, as shown in FIG. 10 and FIG. 11, both data advertised by using an inter-domain advertisement TLV and data advertised by using an intra-domain advertisement TLV further include at least one of an identifier 1 (Flag1), an identifier 2 (Flag2), and an identifier 3 (Flag1). Values of the data are respectively shown as follows.

Flag1: Indicates an anycast type identifier, indicates whether an advertised IP address prefix is an anycast address prefix, and occupies one bit. For example, if Flag1=1, it indicates that the IP address prefix is the anycast address prefix; or if Flag1=0, it indicates that the IP address prefix is not the anycast address prefix.

Flag2: Indicates an attribute identifier, indicates whether a packet can enter an AS through an internet interface, and occupies one bit. For example, if Flag2=1, it indicates that the packet can enter the AS through the internet interface; or if Flag1=0, it indicates that the packet cannot enter the AS through the internet interface. The packet is a data packet sent by an external network to which an inter-domain advertisement packet in which the inter-domain advertisement TLV is located belongs, and the IP address prefix is used as a source IP address prefix in the data packet. An edge network device that is in the AS and that receives the inter-domain advertisement packet may determine, based on a network tag (Tag) in the inter-domain advertisement TLV, the external network to which the inter-domain advertisement packet belongs, or determine, based on an external interface that receives the inter-domain advertisement packet, the external network to which the inter-domain advertisement packet belongs.

Flag3: Indicates an allowlist generation identifier, indicates whether to generate an allowlist in a source address validation list based on the IP address prefix, and occupies one bit. For example, if Flag3=1, it indicates to generate the allowlist based on the IP address prefix; or if Flag3=0, it indicates that the allowlist cannot be generated based on the IP address prefix.

In another possible implementation, in comparison with the inter-domain advertisement TLV shown in FIG. 2, data advertised by using an inter-domain advertisement TLV shown in FIG. 9 further includes a network tag Tag, indicating a network ID of an external network to which an advertised IP address prefix belongs.

A procedure of the method for obtaining the source address validation list provided in this application is described based on the inter-domain advertisement TLV shown in FIG. 10 and the intra-domain advertisement TLV shown in FIG. 11 with reference to the following step 501 and step 502.

501: A first edge network device obtains a first IP address prefix owned by a first network.

Step 501 is similar to step 401, and there are the following four differences.

### Difference 1:

When a first-type IP address prefix is a first-type IP address prefix, in this embodiment of this application, an intra-domain advertisement packet including the first IP address prefix is generated in a format of the intra-domain advertisement TLV shown in FIG. 11. In this case, Flag1 to Flag3 in the intra-domain advertisement packet are invalid.

When the first IP address prefix is a second-type prefix, there are the following second difference and the following third difference.

### Difference 2:

When the obtained first IP address prefix is the second-type IP address prefix, before a first device generates an inter-domain advertisement packet including the first IP address prefix, for any first IP address prefix, the first device determines, depending on whether the first IP address prefix is an anycast address prefix, an anycast type identifier corresponding to the first IP address prefix. For example, if the first IP address prefix is the anycast address prefix, the anycast type identifier Flag1 is 1; otherwise, the anycast type identifier Flag1 is 0.

The first device determines, depending on whether a packet sent by the first network can enter, through an internet interface, an AS connected to the first network, an attribute identifier corresponding to the first IP address prefix. The packet is a packet whose source IP address prefix is the first IP address prefix. For example, if the packet can enter the AS through the internet interface, the attribute identifier Flag2 is 1; otherwise, the attribute identifier Flag2 is 0.

The first device determines whether the obtained first IP address prefix is all IP address prefixes owned by the first network. For example, the first device collects statistics on source IP address prefixes of a plurality of packets sent from the first network in a historical time period including a current moment. If the source IP address prefixes obtained through statistics collection are the same as the obtained first IP address prefix, the first device determines that the obtained first IP address prefix is all the IP address prefixes owned by the first network; or if the source IP address prefix obtained through statistics collection is different from the obtained first IP address prefix, the first device determines that the obtained first IP address prefix is not all the IP address prefixes owned by the first network. When the obtained first IP address prefix is all the IP address prefixes owned by the first network, it is determined that an allowlist generation identifier Flag3 corresponding to the first IP address prefix is 1. When the obtained first IP address prefix is not all the IP address prefixes owned by the first network, it is determined that an allowlist generation identifier Flag3 corresponding to the first IP address prefix is 0. Alternatively, a value of the allowlist generation identifier is not determined temporarily, a new IP address prefix continues to be obtained from the first network until the obtained first IP address prefix is all the IP address prefixes owned by the first network, and it is determined that the allowlist generation identifier Flag3 corresponding to the first IP address prefix is 1. In another possible implementation, if the first IP address prefix is an anycast address prefix, an allowlist generation identifier Flag3 is 0, to avoid subsequently adding the first IP address prefix to an allowlist.

The first device generates an inter-domain advertisement TLV based on a network ID of the first network, the first IP address prefix, and an anycast type identifier, an attribute identifier, and the allowlist generation identifier that correspond to the first IP address prefix and based on a structure of the inter-domain advertisement TLV shown in FIG. 10.

### Difference 3:

When an edge network device that is in the AS and that is connected to the first network generates an intra-domain advertisement packet based on the inter-domain advertisement packet, in this embodiment of this application, an intra-domain advertisement packet including the first IP address prefix is generated in the format of the intra-domain advertisement TLV shown in FIG. 11. In this case, Flag1 to Flag3 in the intra-domain advertisement packet are valid, and values of Flag1 to Flag3 are the same as values of Flag1 to Flag3 in the intra-domain advertisement packet.

### Difference 4:

**In** this embodiment of this application, at least one of first-type advertisement information and second-type advertisement information of any IP address prefix further includes Flag1 to Flag3 of the IP address prefix, and values of Flag1 to Flag3 are the same as values of Flag1 to Flag3 in an inter-domain advertisement packet or an intra-domain advertisement packet in which the IP address prefix is located.

502: Each edge network device in the AS obtains the source address validation list based on the first IP address prefix and an access type of the first network, where the source address validation list includes a first external interface and the first IP address prefix.

Step 502 is similar to step 402, and a difference lies in that, in another possible implementation, when the first IP address prefix is the second-type IP address prefix, each edge network device obtains the source address validation list based on Flag1 to Flag3 in the first IP address prefix. The following uses the first edge network device as an example to describe the process.

The first edge network device queries second-type advertisement information of any first IP address prefix for an allowlist generation identifier of the first IP address prefix. If the allowlist generation identifier indicates to generate an allowlist in the source address validation list based on the first IP address prefix, the first edge network device performs step C21 and step C22, to add the first IP address prefix to the allowlist in the source address validation list.

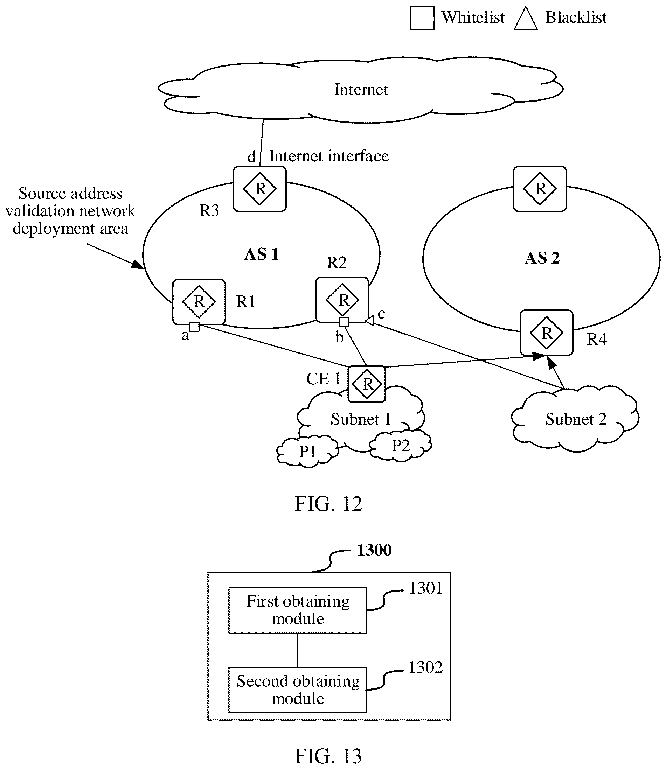

When the first IP address prefix is added to the allowlist, in another possible implementation, the first network is further connected to a plurality of edge network devices in the AS. The first device may further send different inter-domain advertisement packets to the plurality of edge network devices, and/or the edge network device in the AS may further determine, based on routing information in the AS, a first-type IP address prefix owned by the first network. If the first edge network device further queries local first-type advertisement information and local second-type advertisement information for each first-type IP address prefix and each second-type IP address prefix that are owned by the first network, the first edge network device adds each first-type IP address prefix and each second-type IP address prefix that are owned by the first network to the allowlist in the source address validation list, to add as many IP address prefixes owned by the first network as possible to the allowlist. FIG. 12 is used as an example. It is assumed that a subnet 1 is the first network. In this case, a source address list that is of the subnet 1 and that is obtained by an edge network device R1 is shown in the following Table 8, and a source address list that is of the subnet 1 and that is obtained by an edge network device R2 is shown in the following Table 9.

**Table 8**

| Interface ID | Blocklist | Allowlist |
|---|---|---|
| a | None | P1 and P2 |

**Table 9**

| Interface ID | Blocklist | Allowlist |
|---|---|---|
| b | None | P1 and P2 |

In another possible implementation, after the first network has the allowlist, if the first device detects that a first IP address prefix is not an IP address prefix owned by the first network, or the first IP address prefix owned by the first network is updated, the first device may further send an allowlist deletion request to each edge network device that is in the AS and that is connected to the first network, where the list deletion request indicates to delete the allowlist of the first network. For example, the allowlist deletion request includes the network ID of the first network, or the allowlist deletion request includes the network ID of the first network and a deletion identifier, where the deletion identifier indicates to delete the allowlist of the first network. After receiving the list deletion request, any edge network device connected to the first network queries, based on the network ID in the list deletion request, for an external interface that is locally connected to the first network, and deletes an allowlist that is of the first network and that is associated with the external interface, to avoid a subsequent error in source address validation performed on a packet from the first network based on the allowlist.

In another possible implementation, if there are a plurality of first IP address prefixes of the first network, and an allowlist generation identifier in second-type advertisement information of any first IP address prefix indicates that an allowlist cannot be generated based on the first IP address prefix, for each first IP address prefix, the edge network device connected to the first network does not perform a step of obtaining the allowlist in the source address validation list based on the first IP address prefix and an interface identifier of the first external interface, but performs a step (for example, step C12) of obtaining a blocklist in the source address validation list based on the first IP address prefix and the interface identifier of the first external interface.

If an allowlist generation identifier of any first IP address prefix indicates that the allowlist in the source address validation list cannot be generated based on the IP address prefix, the first edge network device performs step C11 and step C12, to add the first IP address prefix to the blocklist in the source address validation list.

When the first network is a cross-domain multi-homing access network or an internet access network, whether to generate the allowlist based on the first IP address prefix is advertised to the edge network device in the AS by using allowlist generation identifiers in the inter-domain advertisement packet and the intra-domain advertisement packet, the edge network device does not need to determine, depending on whether all IP address prefixes of the first network are collected, whether to add the first IP address prefix to the allowlist or the blocklist, and the edge network device does not need to determine, by querying the access type of the first network, whether to add the first IP address prefix to the allowlist or the blocklist, so that workload of the edge network device is reduced.

There may be a plurality of valid network sources of a packet with an anycast address, and a packet sent by a cross-domain multi-homing network may also enter the AS through the internet interface. Therefore, based on this, when the first network is of a multi-homing access type, for any second network and any first IP address prefix, the first edge network device determines, based on parameters such as an access type identifier of the second network and the anycast type identifier and the attribute identifier that correspond to the first IP address prefix in the inter-domain advertisement packet, whether to perform, for the first IP address prefix, the operation in step C12 of obtaining the blocklist in the source address validation list based on the first IP address prefix and the interface identifier of the first external interface.

For example, the first edge network device obtains, from the second-type advertisement information of the first IP address prefix, the anycast type identifier and the attribute identifier that correspond to the first IP address prefix, and obtains the access type identifier of the second network from a global interface configuration information table. If the access type identifier of the second network is not an identifier of an internet access type (in other words, the access type of the second network is a non-internet access type, and the non-internet access type means an access type other than the internet access type, for example, a single-homing access type, a complete multi-homing access type, or a cross-domain multi-homing access type), the first edge network device determines, based on the anycast type identifier corresponding to the first IP address prefix, whether to perform step C12 for the first IP address prefix. For example, if the anycast type identifier indicates that the first IP address prefix is not an anycast address prefix, the first edge network device performs step C12 for the first IP address prefix. If the anycast type identifier indicates that the first IP address prefix is an anycast address prefix, because the first IP address prefix may enter the AS through a first external interface connected to the second network, the first edge network device does not perform step C12 for the first IP address prefix.

If the access type identifier of the second network is an identifier of the internet access type, the first edge network device determines, based on the attribute identifier corresponding to the first IP address prefix, whether to perform step C12 for the first IP address prefix. For example, if the attribute identifier indicates that the packet cannot enter the AS through the internet interface, the packet does not enter the AS through an external interface network connected to an internet (for example, the second network), and the first edge network device performs step C12 for the first IP address prefix. If the attribute identifier indicates that the packet can enter the AS through the internet interface, the packet may enter the AS through an internet interface connected to an internet (for example, the second network), and the first edge network device does not perform step C12 for the first IP address prefix.

In another possible implementation, if the first edge network device performs step C12 for the first IP address prefix, before performing step C12, the first edge network device first determines whether a first source network of the first IP address prefix is the same as a second source network of the first IP address prefix, and when the first source network is the same as the second source network, performs step C12.

If the first edge network device does not perform step C12 for the first IP address prefix, the first edge network device may further query whether the first IP address prefix exists in the blocklist in the source address list, and if the first IP address prefix exists in the blocklist, delete the first IP address prefix from the blocklist, to avoid a case in which a packet whose source IP address prefix is the first IP address prefix cannot subsequently pass source address validation on the first external interface.

In a similar manner, each edge network device in each AS can also obtain, based on the second-type advertisement information of the first IP address prefix, a blocklist of a local external interface connected to the second network.

Based on the identifier of the first network, the external interface connected to the first network or the second network can be accurately located from external interfaces of the first edge network device, and then the source address validation list is generated based on the interface identifier of the accurately located external interface, so that accurate source address validation can be subsequently performed, based on the source address validation list, on a packet received by the external interface.

In step 501 and step 502, an edge network device in the AS obtains an IP address prefix owned by an external network connected to the AS, so that a source address validation list can be obtained based on the obtained IP address prefix and an access type of the external network.

For step 401, step 402, step 501, and step 502, in another possible implementation, if the access type of the first network is the cross-domain multi-homing access type or the internet access type, and the first IP address prefix is the first-type IP address prefix, the edge network device in the AS cannot add the first IP address prefix to the allowlist of the external interface connected to the first network, and cannot add the first IP address prefix to the blocklist of the interconnection interface, but can add the first IP address prefix to a blocklist of an external interface connected to a single-homing access network or a complete multi-homing access network.

For step 401, step 402, step 501, and step 502, the intra-domain advertisement packet is sent in the AS, so that an edge network device that is not connected to the first network can also obtain the IP address prefix that is owned by the first network and that is used for source address validation, to add the IP address prefix of the first network to a local source address validation list.

For step 401, step 402, step 501, and step 502, in another possible implementation, for any edge network device in the AS, if the IP address prefix is added to an allowlist of any local external interface, the edge network device does not subsequently perform a step of obtaining a blocklist of the external interface, in other words, does not subsequently add the IP address prefix to the blocklist of the external interface, and the blocklist of the external interface is invalid by default.

For any edge network device in the AS and any external interface (for example, a first external interface) in the edge network device, when the external interface has a source address validation list, the edge network device performs, based on the source address validation list, source address validation on each data packet received through the external interface. For example, the source address validation list of the first external interface in the first edge network device is used as an example. With reference to the following step 601 and step 602, a process is described as follows.

601: The first edge network device receives a data packet through the first external interface, where the data packet includes a source address.

The source address is a source IP address of the data packet.

602: The first edge network device performs source address validation on the data packet based on the source address and a first IP address prefix in the source address validation list of the external interface.

The first edge network device obtains an IP address prefix in the source address. For example, the first edge network device matches the IP address prefix from the source IP address according to a longest prefix matching principle, and a matched IP address prefix is the IP address prefix in the source address. For ease of description, the IP address prefix in the source address is referred to as a second IP address prefix.

The first edge network device compares the second IP address prefix with the IP address prefix in the source address validation list, to implement source address validation. For example, when the source address validation list includes a blocklist, the blocklist is queried for the IP address prefix (referred to as the second IP address prefix) of the source address. If the second IP address prefix is found in the blocklist, for example, a first IP address prefix in the blocklist is the second IP address prefix, the second IP address prefix does not belong to an external network connected to the first external interface, the data packet is an invalid packet, and validation performed by the first edge network device on the data packet fails. If the second IP address prefix does not exist in the blocklist, the second IP address prefix may belong to an external network connected to the first external interface, the data packet is a valid packet, and validation performed by the first edge network device on the data packet succeeds.

When the source address validation list includes an allowlist, the allowlist is queried for the second IP address prefix. If the source IP address prefix does not exist in the allowlist, the source IP address prefix does not belong to an external network connected to the first external interface, the data packet is an invalid packet, and validation performed by the first edge network device on the data packet fails. If the second IP address prefix exists in the allowlist, for example, a first IP address prefix in the allowlist is the second IP address prefix, the source IP address prefix belongs to an external network connected to the first external interface, the data packet is a valid packet, and validation performed by the first edge network device on the data packet succeeds.

In step 501 and step 502, an example in which the first network is a cross-domain multi-homing network is used for description. An attribute of the IP address prefix used by the first network is advertised in the AS via an inter-domain advertisement packet with a tag and an intra-domain advertisement packet with a tag, to avoid a case in which the edge network device determines the attribute of the IP address prefix in a complex manner like query or validation, so that operation and maintenance complexity is reduced, and a risk of false positive of the source address list is reduced.

In the foregoing embodiment, an IP address prefix owned by a single-homing access network or a complete multi-homing access network is added to an allowlist of an external interface connected to the single-homing access network or the complete multi-homing access network, and source address validation is performed, by using the allowlist, on a data packet received by the external interface, so that a data packet whose source IP address prefix is an IP address prefix owned by another network can enter the AS through the external interface; and an IP address prefix owned by a cross-domain multi-homing access network or an internet access network is added to a blocklist of an external interface not connected to the cross-domain multi-homing access network or the internet access network, and source address validation is performed, by using the blocklist, on a data packet received by the external interface, so that a packet whose source IP address prefix is the IP address prefix owned by the cross-domain multi-homing access network or the internet access network can enter the AS through the external interface.

The foregoing method embodiments are described by using an example in which the first device is a device in the first network. In another possible implementation, the first device is not located in the first network and is not located in the AS, and the first device has permission to collect the IP address prefix owned by the first network and can obtain the first IP address prefix owned by the first network. Herein, a deployment location of the first device is not limited in this application.

The foregoing describes the methods in embodiments of this application, and the following describes apparatuses in embodiments of this application. It should be understood that the apparatus described below has any function of the network device in the foregoing methods. The foregoing describes in detail the method for obtaining the source address validation list and the advertisement packet sending method provided in this application with reference to FIG. 1 to FIG. 12. Based on a same inventive concept, the following describes the apparatuses that are based on the methods with reference to FIG. 13 to FIG. 17. It should be understood that the technical features described in the method embodiments are also applicable to the following apparatus embodiments.

FIG. 13 is a diagram of a structure of an apparatus for obtaining a source address validation list according to an embodiment of this application. The apparatus 1300 shown in FIG. 13 is used in a first edge network device in an AS, may be the first edge network device or a part of the first edge network device in the foregoing embodiments, and is configured to perform a method for obtaining the source address validation list performed by the first edge network device. As shown in FIG. 13, the apparatus 1300 includes:
a first obtaining module 1301, configured to obtain a first IP address prefix owned by a first network, where the first network is any network connected to the autonomous domain and outside the autonomous domain; and
a second obtaining module 1302, configured to obtain the source address validation list based on the first IP address prefix and an access type of the first network, where the source address validation list includes the first IP address prefix and an interface identifier of a first external interface, and the first external interface is determined based on the access type.

In a possible implementation, the second address obtaining module 1302 is configured to:
if the access type of the first network is a cross-domain multi-homing access type or an internet access type, determine an external interface that is in the first edge network device and that is connected to the second network as the first external interface; and
obtain a blocklist in the source address validation list based on the first IP address prefix and the interface identifier of the first external interface, where the blocklist includes the first IP address prefix.

**In** a possible implementation, the apparatus 1300 further includes:
a determining module, configured to determine a first source network and a second source network of the first IP address prefix, where the first source network is a network whose first IP address prefix is advertised to the autonomous domain, and the second source network is a network to which the first IP address prefix determined based on routing information in the autonomous domain belongs.

The second obtaining module 1302 is further configured to: if the first source network is the same as the second source network, perform the step of obtaining the blocklist in the source address validation list.

In a possible implementation, the second obtaining module 1302 is configured to:
if the access type of the first network is a single-homing access type or a complete multi-homing access type, determine an external interface that is in the first edge network device and that is connected to the first network as the first external interface; and
obtain an allowlist in the source address validation list based on the first IP address prefix and the interface identifier of the first external interface, where the allowlist includes the first IP address prefix.

In a possible implementation, the first obtaining module 1301 is configured to:
obtain the first IP address prefix based on the routing information in the autonomous domain, where the routing information includes the IP address prefix owned by the first network.

In a possible implementation, the first obtaining module 1301 is configured to:
receive an advertisement packet, where the advertisement packet is used for advertising an IP address prefix used for source address validation, and the advertisement packet includes the first IP address prefix; and
obtain the first IP address prefix from the advertisement packet.

In a possible implementation, the first network is connected to the first edge network device, and the advertisement packet is an inter-domain advertisement packet from the first network.

In a possible implementation, the access type of the first network is determined based on an interface identifier of the external interface that is in the first edge network device and that is connected to the first network.

In a possible implementation, the advertisement packet further includes a network identifier of the first network.

In a possible implementation, the advertisement packet is an intra-domain advertisement packet sent by an edge network device in the autonomous domain, and the advertisement packet further includes a network identifier of the first network.

In a possible implementation, the advertisement packet further includes an access type identifier, and the access type of the first network is determined based on the access type identifier.

In a possible implementation, the intra-domain advertisement packet further includes at least one of a blocklist generation identifier, a prefix category identifier, and an inter-domain advertisement identifier, the blocklist generation identifier indicates whether to generate the blocklist in the source address validation list based on the first IP address prefix, the prefix category identifier indicates whether the first IP address prefix is a first-type IP address prefix, the inter-domain advertisement identifier indicates whether the first IP address prefix is a second-type IP address prefix, the first-type IP address prefix is an IP address prefix obtained based on the routing information in the autonomous domain, and the second-type IP address prefix is an IP address prefix obtained from an inter-domain advertisement packet.

In a possible implementation, the advertisement packet further includes an anycast type identifier, the anycast type identifier indicates whether the first IP address prefix is an anycast address prefix, and the access type of the second network connected to the first external interface is a non-internet access type.

The second obtaining module 1302 is further configured to: if the anycast type identifier indicates that the first IP address prefix is not the anycast address prefix, perform the step of obtaining the source address validation list, where the source address validation list includes the interface identifier of the first external interface and the blocklist, and the blocklist includes the first IP address prefix.

In a possible implementation, the advertisement packet further includes an attribute identifier, the attribute identifier indicates whether a packet can enter the autonomous domain through an internet interface, and the access type of the second network connected to the first external interface is the internet access type.

The second obtaining module 1302 is further configured to: if the attribute identifier indicates that the packet cannot enter the autonomous domain through the internet interface, perform the step of obtaining the source address validation list, where the source address validation list includes the interface identifier of the first external interface and the blocklist, and the blocklist includes the first IP address prefix.

In a possible implementation, the advertisement packet further includes an allowlist generation identifier, and the allowlist generation identifier indicates whether to generate the allowlist in the source address validation list based on the first IP address prefix. The second obtaining module 1302 is further configured to:
if the allowlist generation identifier indicates to generate the allowlist in the source address validation list based on the first IP address prefix, perform the step of obtaining the source address validation list, where the source address validation list includes the interface identifier of the first external interface and the allowlist, and the allowlist includes the first IP address prefix; or
if the allowlist generation identifier indicates that the allowlist in the source address validation list cannot be generated based on the first IP address prefix, perform the step of obtaining the source address validation list, where the source address validation list includes the interface identifier of the first external interface and the blocklist, and the blocklist includes the first IP address prefix.

In a possible implementation, the apparatus 1300 further includes:
a receiving module, configured to receive a data packet through the first external interface, where the data packet includes a source address; and
a validation module, configured to perform source address validation on the data packet based on the source address and the first IP address prefix in the source address validation list.

The apparatus 1300 corresponds to the first edge network device in the foregoing method embodiments. The modules in the apparatus 1300 and the foregoing other operations and/or functions are respectively intended to implement various source address steps and methods implemented by the corresponding device in the method embodiments. For specific details, refer to the foregoing method embodiments. For brevity, details are not described herein again.

When the apparatus 1300 obtains the source address validation list, division into the foregoing functional modules is merely used as an example for description. During actual application, the foregoing functions may be allocated to different functional modules for implementation based on a requirement. To be specific, an internal structure of the apparatus 1300 is divided into different functional modules, to implement all or some of the functions described above. In addition, the apparatus 1300 provided in the foregoing embodiment and the embodiment of the method for obtaining the source address validation list belong to a same concept. For a specific implementation process of the apparatus 1300, refer to the foregoing method embodiments. Details are not described herein again.

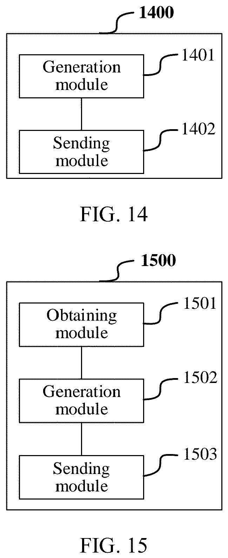

FIG. 14 is a diagram of a structure of an apparatus for sending an advertisement packet according to an embodiment of this application. The apparatus 1400 shown in FIG. 14 is located in a first network, may be the first device or a part of the first device in the foregoing embodiments, and is configured to perform an advertisement packet sending method performed by the first device. As shown in FIG. 14, the apparatus 1400 includes:
a generation module 1401, configured to generate an inter-domain advertisement packet, where the inter-domain advertisement packet is used for advertising an IP address prefix used for source address validation, and the inter-domain advertisement packet includes a first IP address prefix owned by a first network; and
a sending module 1402, configured to send the inter-domain advertisement packet to an autonomous domain connected to the first network.

In a possible implementation, the inter-domain advertisement packet further includes at least one of an anycast type identifier, an attribute identifier, an allowlist generation identifier, and a network identifier of the first network, the anycast type identifier indicates whether the first IP address prefix is an anycast address prefix, the attribute identifier indicates whether a packet can enter the autonomous domain through an internet interface, and the allowlist generation identifier indicates whether to generate an allowlist in a source address validation list based on the first IP address prefix.

FIG. 15 is a diagram of a structure of another advertisement packet sending apparatus according to an embodiment of this application. The apparatus 1500 shown in FIG. 15 is used in a first edge network device in an AS, may be the first edge network device or a part of the first edge network device in the foregoing embodiments, and is configured to perform an advertisement packet sending and obtaining method performed by the first edge network device. As shown in FIG. 15, the apparatus 1500 includes:
an obtaining module 1501, configured to obtain a first IP address prefix owned by a first network, where the first network is any network connected to the autonomous domain and outside the autonomous domain;
a generation module 1502, configured to generate an intra-domain advertisement packet based on the first IP address prefix and a network identifier of the first network, where the intra-domain advertisement packet is used for advertising an IP address prefix used for source address validation, and the intra-domain advertisement packet includes the first IP address prefix and the network identifier; and
a sending module 1503, configured to send the intra-domain advertisement packet to a second edge network device in the autonomous domain.

In a possible implementation, the obtaining module 1501 is configured to:
obtain the first IP address prefix from an inter-domain advertisement packet from the first network, where the inter-domain advertisement packet includes the first IP address prefix.

In a possible implementation, the inter-domain advertisement packet further includes at least one of an anycast type identifier, an attribute identifier, an allowlist generation identifier, and a network identifier of the first network, the anycast type identifier indicates whether the first IP address prefix is an anycast address prefix, the attribute identifier indicates whether a packet can enter the autonomous domain through an internet interface, and the allowlist generation identifier indicates whether to generate an allowlist in a source address validation list based on the first IP address prefix.

In a possible implementation, the intra-domain advertisement packet further includes at least one of the anycast type identifier, the attribute identifier, the allowlist generation identifier, and the network identifier of the first network.

In a possible implementation, the obtaining module 1501 is configured to:
obtain the first IP address prefix based on routing information in the autonomous domain, where the routing information includes the IP address prefix owned by the first network.

In a possible implementation, the intra-domain advertisement packet further includes at least one of an access type identifier, a blocklist generation identifier, a prefix category identifier, and an inter-domain advertisement identifier, the access type identifier indicates an access type of the first network, the blocklist generation identifier indicates whether to generate a blocklist in a source address validation list based on the first IP address prefix, the prefix category identifier indicates whether the first IP address prefix is a first-type IP address prefix, the inter-domain advertisement identifier indicates whether the first IP address prefix is a second-type IP address prefix, the first-type IP address prefix is an IP address prefix obtained based on the routing information in the autonomous domain, and the second-type IP address prefix is an IP address prefix obtained from an inter-domain advertisement packet.

The apparatus 1400 and the apparatus 1500 respectively correspond to the first device and the first edge network device in the foregoing method embodiments. The modules in the apparatus 1400 and the apparatus 1500 and the foregoing other operations and/or functions are respectively intended to implement various steps in the advertisement packet sending method implemented by the corresponding device in the method embodiments. For specific details, refer to the foregoing method embodiments. For brevity, details are not described herein again.

When the apparatus 1400 and the apparatus 1500 send the advertisement packet, division into the foregoing functional modules is merely used as an example for description. During actual application, the foregoing functions may be allocated to different functional modules for implementation based on a requirement. To be specific, internal structures of the apparatus 1400 and the apparatus 1500 are divided into different functional modules, to implement all or some of the functions described above. In addition, the apparatus 1400 provided in the foregoing embodiment and the embodiment of the advertisement packet sending method performed by the first device belong to a same concept, and the apparatus 1500 and the embodiment of the advertisement packet sending method performed by the first edge network device belong to a same concept. For specific implementation processes of the apparatus 1400 and the apparatus 1500, refer to the foregoing method embodiments. Details are not described herein again.

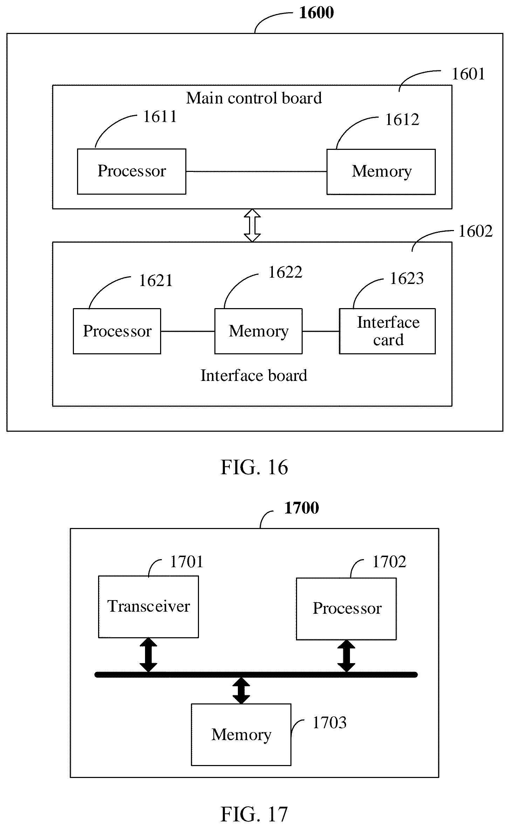

The first device and each edge network device in the AS are electronic devices. The following separately describes structures of the network device and the first device with reference to FIG. 16 and FIG. 17. FIG. 16 is a diagram of a structure of a network device according to an embodiment of this application. The network device 1600 shown in FIG. 16 may be any network device in the AS in embodiments shown in FIG. 1 to FIG. 6, for example, the first edge network device or the second edge network device. The network device 1600 may be a switch, a router, or another network device that forwards a data packet.

As shown in FIG. 16, the network device 1600 includes a main control board 1601 and an interface board 1602.

The main control board 1601 is also referred to as a main processing unit (main processing unit, MPU) or a route processor card (route processor card). The main control board 1601 is configured to control and manage each component in the network device 1600, and includes functions of route calculation, device management, device maintenance, and protocol processing. As shown in FIG. 16, the main control board 1601 includes a processor 1611 and a memory 1612. The processor 1611 is configured to invoke program code in the memory of the main control board, to perform the source address validation list generation method and/or any advertisement packet sending method provided in the method embodiments of this application. For example, if the electronic device 1600 is an electronic device and is configured as an edge network device in an autonomous domain, the processor 1611 is configured to invoke the program code of the memory 1622, and may perform the method for obtaining a source address validation list and/or the advertisement packet sending method performed by the first edge network device that are/is provided in the method embodiments of this application; or if the electronic device 1600 is configured as a first device, the processor 1611 invokes the program code of the memory 1612, and may perform the advertisement packet sending method performed by the first device provided in the method embodiments of this application.

The interface board 1602 is also referred to as a line processing unit (line processing unit, LPU), a line card (line card), or a service board. The interface board 1602 is configured to provide various service interfaces and implement data packet forwarding. The service interface includes but is not limited to an Ethernet interface, a POS (Packet over SONET/SDH) interface, and the like. The Ethernet interface is, for example, a flexible Ethernet service interface (Flexible Ethernet Client, FlexE Client).

As shown in FIG. 16, the interface board 1602 includes a processor 1621, a memory 1622, and an interface card 1623. The processor 1621 is configured to control and manage the interface board 1602 and communicate with the processor 1611. For example, the processor 1621 is configured to invoke program code of the memory 1622, to receive and send a data packet. The processor 1621 is configured to invoke program code in the memory of the main control board, to perform the source address validation list generation method and/or any advertisement packet sending method provided in the method embodiments of this application. For example, if the electronic device 1600 is an electronic device and is configured as an edge network device in an autonomous domain, the processor 1621 is configured to invoke the program code of the memory 1622, and may further perform the method for obtaining a source address validation list and/or the advertisement packet sending method performed by the first edge network device that are/is provided in the method embodiments of this application; or if the electronic device 1600 is configured as a first device, the processor 1621 is configured to invoke the program code of the memory 1622, and may further perform the advertisement packet sending method performed by the first device provided in the method embodiments of this application.

The interface card 1623 is configured to implement an interconnection function of a physical layer. Original traffic enters the interface board 1602 from the interface card 1623, and a processed data packet is sent from the interface card 1623. The interface card 1623 includes at least one physical interface. The physical interface is also referred to as a physical port, and can be used as an external interface or an internal interface in the network device. The interface card 1623 is also referred to as a subcard, and may be mounted on the interface board 1602.

The main control board 1601 is coupled to the interface board 1602. For example, the main control board 1601 and the interface board 1602 are connected to a system backplane through a system bus to implement interworking. In a possible implementation, an inter-process communication (inter-process communication, IPC) protocol channel is established between the main control board 1601 and the interface board 1602, and the main control board 1601 and the interface board 1602 communicate with each other through the IPC channel.

There may be one or more main control boards 1601. When there are a plurality of main control boards, the main control boards may include an active main control board and a standby main control board. There may be one or more interface boards 1602. A stronger data processing capability of the network device 1600 indicates more interface boards 1602 provided. There may also be one or more interface cards 1623 on the interface board 1602. In a distributed forwarding architecture, the network device 1600 may further have at least one switching board, and data exchange between a plurality of interface boards 1602 is implemented by using the switching board, to provide a large-capacity data exchange and processing capability. Therefore, a data access and processing capability of the network device in the distributed architecture is better than that of a device in a centralized architecture. Optionally, the network device 1600 may alternatively be in a form in which there is only one card. To be specific, there is no switching board, and functions of the interface board and the main control board are integrated on the card. In this case, the processor on the interface board and the processor on the main control board may be combined to form a central processing unit on the card, to perform functions obtained by combining the processors. This form of device (for example, a network device such as a low-end switch or a router) has a weak data exchange and processing capability. A specific architecture that is to be used depends on a specific networking deployment scenario. This is not limited herein.

FIG. 17 is a diagram of a structure of an electronic device according to an embodiment of this application. In a possible implementation, the electronic device 1700 shown in FIG. 17 is configured as any edge network device in the foregoing AS, for example, the first edge network device or the second edge network device. In this case, the electronic device 1700 may be a switch, a router, or another network device that forwards a data packet. In a possible implementation, the electronic device 1700 is configured as the first device. In this case, the electronic device 1700 may be a network device or a non-network device in a network connected to the AS.

As shown in FIG. 17, the electronic device 1700 includes a transceiver 1701, a processor 1702, and a memory 1703. The transceiver 1701 is configured to receive and send a data packet, data information, an advertisement packet, or the like.

The processor 1702 is configured to perform related steps performed by the edge network device or the first device in the foregoing method embodiments. The processor 1702 may include one or more processing cores. The processor 1702 may be implemented in at least one hardware form of digital signal processing (digital signal processing, DSP), a field-programmable gate array (field-programmable gate array, FPGA), or a programmable logic array (programmable logic array, PLA). The processor 1702 may further include a main processor and a coprocessor. The main processor is a processor configured to process data in a wake-up state, and is also referred to as a central processing unit (central processing unit, CPU). The coprocessor is a low power consumption processor configured to process data in a standby state.

The memory 1703 may include one or more computer-readable storage media, and the computer-readable storage medium may be non-transient. The memory 1703 further includes a high-speed random access memory and a non-volatile memory, for example, one or more magnetic disk storage devices or flash memory storage devices. In some embodiments, the non-transient computer-readable storage medium in the memory 1703 is configured to store at least one piece of program code, and the at least one piece of program code is executed by the processor 1702, to implement the method for obtaining a source address validation list provided in the method embodiments of this application and/or any advertisement packet sending method provided in the method embodiments of this application.

In an example embodiment, a computer-readable storage medium is further provided, for example, a memory including program code. The program code may be executed by a processor of an electronic device to complete the method for obtaining the source address validation list, the advertisement packet sending method performed by the first edge network device, or the advertisement packet sending method performed by the first device in the foregoing embodiments. For example, the computer-readable storage medium is a non-transitory computer-readable storage medium, such as a read-only memory (read-only memory, ROM), a random access memory (random access memory, RAM), a compact disc read-only memory (compact disc read-only memory, CD-ROM), a magnetic tape, a floppy disk, or an optical data storage device.

An embodiment of this application further provides a computer program product or a computer program. The computer program product or the computer program includes program code, and the computer instructions are stored in a computer-readable storage medium. A processor of an electronic device reads the program code from the computer-readable storage medium, and the processor executes the program code, so that the electronic device performs the foregoing method for obtaining a source address validation list or any one of the foregoing advertisement packet sending methods.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, so that the chip performs the method for obtaining the source address validation list or any one of the foregoing advertisement packet sending methods in the foregoing method embodiments.

The apparatus, the device, the computer-readable storage medium, the computer program product, and the chip provided in embodiments are all configured to perform the corresponding methods provided above. Therefore, for beneficial effects that can be achieved, refer to the beneficial effects of the corresponding methods provided above. Details are not described herein again.

Based on descriptions of the foregoing implementations, a person skilled in the art may understand that, for the purpose of convenient and brief description, division of the foregoing functional modules is only used as an example for description. During actual application, the foregoing functions may be allocated to different functional modules for implementation based on a requirement. In other words, an internal structure of an apparatus is divided into different functional modules to implement all or some of the functions described above. In addition, the foregoing apparatuses and the source address validation list generation method and/or the advertisement packet sending method provided in the foregoing embodiments belong to a same concept. For a specific implementation process thereof, refer to the method embodiments. Details are not described herein again.

In descriptions of this application, "/" indicates "or", unless otherwise specified. For example, A/B may indicate A or B. In this specification, "and/or" describes only an association relationship between associated objects and represents that three relationships may exist. For example, A and/or B may represent the following three cases: Only A exists, both A and B exist, and only B exists. In addition, "at least one" means one or more, and "a plurality of" means two or more. Terms such as "first" and "second" do not limit a quantity and an execution sequence, and the terms such as "first" and "second" do not indicate a definite difference.

In this application, the word such as "example" or "for example" represents giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

Information (including but not limited to user equipment information, personal information of a user, and the like), data (including but not limited to data used for analysis, stored data, displayed data, and the like), and a signal in this application are all authorized by the user or fully authorized by all parties, and capturing, use, and processing of related data need to conform to related laws, regulations, and standards of related countries and regions. For example, the IP address prefix and the like in this application are all obtained under full authorization.

All of the foregoing technical solutions may form optional embodiments of this disclosure through any combination. Details are not described herein again.

The foregoing descriptions are merely optional embodiments of this application, but are not intended to limit this application. Any modification, equivalent replacement, or improvement made without departing from the spirit and principle of this application should fall within the protection scope of this application.

## Claims

1. A method for obtaining a source address validation list, wherein the method is performed by a first edge network device in an autonomous domain, and the method comprises:
obtaining a first IP address prefix owned by a first network, wherein the first network is any network connected to the autonomous domain and outside the autonomous domain; and
obtaining the source address validation list based on the first IP address prefix and an access type of the first network, wherein the source address validation list comprises the first IP address prefix and an interface identifier of a first external interface, and the first external interface is determined based on the access type.

2. The method according to claim 1, wherein obtaining the source address validation list based on the first IP address prefix and the access type of the second network comprises:
if the access type of the first network is a cross-domain multi-homing access type or an internet access type, determining an external interface that is in the first edge network device and that is connected to the second network as the first external interface; and
obtaining a blocklist in the source address validation list based on the first IP address prefix and the interface identifier of the first external interface, wherein the blocklist comprises the first IP address prefix.

3. The method according to claim 2, wherein the method further comprises:
determining a first source network and a second source network of the first IP address prefix, wherein the first source network is a network whose first IP address prefix is advertised to the autonomous domain, and the second source network is a network to which the first IP address prefix determined based on routing information in the autonomous domain belongs; and
if the first source network is the same as the second source network, performing the step of obtaining the blocklist in the source address validation list.

4. The method according to claim 1, wherein obtaining the source address validation list based on the first IP address prefix and the access type of the second network comprises:
if the access type of the first network is a single-homing access type or a complete multi-homing access type, determining an external interface that is in the first edge network device and that is connected to the first network as the first external interface; and
obtaining an allowlist in the source address validation list based on the first IP address prefix and the interface identifier of the first external interface, wherein the allowlist comprises the first IP address prefix.

5. The method according to any one of claims 1 to 4, wherein the first network is connected to the first edge network device, and obtaining the first IP address prefix owned by the first network comprises:
obtaining the first IP address prefix based on the routing information in the autonomous domain, wherein the routing information comprises the IP address prefix owned by the first network.

6. The method according to any one of claims 1 to 4, wherein obtaining the first IP address prefix owned by the first network comprises:
receiving an advertisement packet, wherein the advertisement packet is used for advertising an IP address prefix used for source address validation, and the advertisement packet comprises the first IP address prefix; and
obtaining the first IP address prefix from the advertisement packet.

7. The method according to claim 6, wherein the first network is connected to the first edge network device, and the advertisement packet is an inter-domain advertisement packet from the first network.

8. The method according to claim 5 or 7, wherein the access type of the first network is determined based on an interface identifier of the external interface that is in the first edge network device and that is connected to the first network.

9. The method according to claim 7, wherein the advertisement packet further comprises a network identifier of the first network.

10. The method according to claim 6, wherein the advertisement packet is an intra-domain advertisement packet sent by an edge network device in the autonomous domain, and the advertisement packet further comprises a network identifier of the first network.

11. The method according to claim 10, wherein the advertisement packet further comprises an access type identifier, and the access type of the first network is determined based on the access type identifier.

12. The method according to claim 10 or 11, wherein the intra-domain advertisement packet further comprises at least one of a blocklist generation identifier, a prefix category identifier, and an inter-domain advertisement identifier, the blocklist generation identifier indicates whether to generate the blocklist in the source address validation list based on the first IP address prefix, the prefix category identifier indicates whether the first IP address prefix is a first-type IP address prefix, the inter-domain advertisement identifier indicates whether the first IP address prefix is a second-type IP address prefix, the first-type IP address prefix is an IP address prefix obtained based on the routing information in the autonomous domain, and the second-type IP address prefix is an IP address prefix obtained from an inter-domain advertisement packet.

13. The method according to any one of claims 6, 7, and 9 to 12, wherein the advertisement packet further comprises an anycast type identifier, the anycast type identifier indicates whether the first IP address prefix is an anycast address prefix, the access type of the second network connected to the first external interface is a non-internet access type, and the method further comprises:
if the anycast type identifier indicates that the first IP address prefix is not the anycast address prefix, performing the step of obtaining the source address validation list, wherein the source address validation list comprises the interface identifier of the first external interface and the blocklist, and the blocklist comprises the first IP address prefix.

14. The method according to any one of claims 6, 7, and 9 to 13, wherein the advertisement packet further comprises an attribute identifier, the attribute identifier indicates whether a packet can enter the autonomous domain through an internet interface, the access type of the second network connected to the first external interface is the internet access type, and the method further comprises:
if the attribute identifier indicates that the packet cannot enter the autonomous domain through the internet interface, performing the step of obtaining the source address validation list, wherein the source address validation list comprises the interface identifier of the first external interface and the blocklist, and the blocklist comprises the first IP address prefix.

15. The method according to any one of claims 6, 7, and 9 to 14, wherein the advertisement packet further comprises an allowlist generation identifier, the allowlist generation identifier indicates whether to generate the allowlist in the source address validation list based on the first IP address prefix, and the method further comprises:
if the allowlist generation identifier indicates to generate the allowlist in the source address validation list based on the first IP address prefix, performing the step of obtaining the source address validation list, wherein the source address validation list comprises the interface identifier of the first external interface and the allowlist, and the allowlist comprises the first IP address prefix; or
if the allowlist generation identifier indicates that the allowlist in the source address validation list cannot be generated based on the first IP address prefix, performing the step of obtaining the source address validation list, wherein the source address validation list comprises the interface identifier of the first external interface and the blocklist, and the blocklist comprises the first IP address prefix.

16. The method according to any one of claims 1 to 15, wherein the method further comprises:
receiving a data packet through the first external interface, wherein the data packet comprises a source address; and
performing source address validation on the data packet based on the source address and the first IP address prefix in the source address validation list.

17. An apparatus for obtaining a source address validation list, wherein the apparatus is configured to perform the method according to any one of claims 1 to 16.

18. An electronic device, wherein the electronic device comprises a processor, and the processor is configured to execute program code, to enable the network device to perform the method according to any one of claims 1 to 16.

19. A computer-readable storage medium, wherein the storage medium stores at least one piece of program code, and the at least one piece of program code is read by a processor to enable an electronic device to perform the method according to any one of claims 1 to 16.
